# EUROPEAN PATENT APPLICATION

(11) **EP 4 756 527 A1**
(43) Date of publication of application: **10.06.2026**
(21) Application number: 24849504.6
(22) Date of filing: 26.07.2024
(51) Int. Cl.: G03B 9/06, G03B 5/04, G03B 17/12, H02K 11/215, H02K 41/035, G03B 9/02, H04N 23/54, H04N 23/55

(54) **APERTURE MODULE, AND LENS MODULE AND CAMERA DEVICE INCLUDING SAME**

(30) Priority: 28.07.2023 KR 20230098776; 31.07.2023 KR 20230099673
(71) Applicant: LG INNOTEK CO., LTD., Seoul 07796 (KR)
(72) Inventor: KIM, Ji Sung, Seoul 07796 (KR); KIM, Kyung Won, Seoul 07796 (KR); LEE, Tae Hoon, Seoul 07796 (KR); KIM, Min Seong, Seoul 07796 (KR)
(74) Representative: Plasseraud IP
(86) International application number: PCT/KR2024/010919
(87) International publication number: WO 2025/028935

(57) **Abstract**

An embodiment comprises: a lens barrel; a plurality of lenses disposed in the lens barrel in the optical axis direction; and an aperture module disposed between two adjacent lenses among the plurality of lenses, wherein the aperture module comprises a coupling part which is coupled to at least one of the two lenses.

## Description

### [Technical Field]

Embodiments relate to an iris module and to a lens module and a camera device including the same.

### [Background Art]

Camera devices are devices that take pictures or videos of subjects, and are mounted in portable devices, drones, vehicles, and the like. In order to improve the quality of an image, a camera device may have an image stabilization (IS) function for correcting or preventing shaking of an image caused by movement of a user, for example, an optical image stabilizer (OIS) and an autofocus (AF) function.

### [Disclosure]

### [Technical Problem]

Embodiments provide a lens module and a camera device capable of performing self-alignment between lenses using an iris module.

Embodiments provide an iris module capable of precisely varying the size of an aperture of an iris unit for a large-diameter lens to a desired value, and provide a lens module and a camera device including the same.

### [Technical Solution]

A lens module according to an embodiment includes a lens barrel, a plurality of lenses disposed in an optical-axis direction in the lens barrel, and an iris module disposed between two adjacent lenses among the plurality of lenses. The iris module includes a coupling portion to be coupled to at least one lens among the two lenses.

The coupling portion may be provided for self-alignment with the at least one lens among the two lenses. The at least one lens may include a protrusion in contact with the coupling portion of the iris module. The coupling portion of the iris module may overlap the protrusion of the at least one lens in a direction perpendicular to the optical-axis direction.

The coupling portion may include a first coupling portion to be coupled to a first lens, which is one of the two lenses, and a second coupling portion to be coupled to a second lens, which is the remaining one of the two lenses.

The first coupling portion may include a first alignment protrusion, the second coupling portion may include a second alignment protrusion, the first lens may include a first protrusion coupled to the first alignment protrusion, and the second lens may include a second protrusion coupled to the second alignment protrusion.

The iris module may include a carrier including the coupling portion and an iris unit disposed in the carrier and configured to vary an incident amount of incident light.

The carrier may include a first carrier and a second carrier located under the first carrier and coupled to the first carrier, and the coupling portion may include a first alignment protrusion disposed on the first carrier to be coupled to a first lens, which is one of the two lenses, and a second alignment protrusion disposed on the second carrier to be coupled to a second lens, which is the remaining one of the two lenses.

The iris unit may include a blade member configured to adjust the size of an aperture for incident light. The second alignment protrusion may have a lower surface disposed lower than a lowermost surface of the blade member.

A lens located at a lowermost side among the plurality of lenses may be located closer to the lower surface of the second alignment protrusion than to a lower surface of the blade member.

The iris module may be disposed between a lens located at a second position from an uppermost side and a lens located at a third position from the uppermost side among the plurality of lenses.

The iris module may be located under the first lens and may be located on the second lens, and a distance between the first coupling portion and an optical axis may be less than a distance between the second coupling portion and the optical axis.

The first lens may be located on the iris module, and the second lens may be located under the iris module. The first lens may include a protrusion corresponding to the first coupling portion of the iris module, and the second lens may include a protrusion corresponding to the second coupling portion of the iris module.

The protrusion of the first lens may be located farther from the optical axis than the first coupling portion, and the protrusion of the second lens may be located closer to the optical axis than the second coupling portion.

A lens module according to another embodiment includes a lens barrel, a plurality of lenses sequentially disposed in an optical-axis direction in the lens barrel, and an iris module disposed in the lens barrel. The iris module includes a carrier disposed between a first lens and a second lens adjacent to each other among the plurality of lenses and an iris unit disposed in the carrier and configured to vary an incident amount of incident light. The first lens is disposed on the second lens, and the carrier includes a first coupling portion to be self-aligned with and coupled to the first lens and a second coupling portion to be self-aligned with and coupled to the second lens.

The first coupling portion may be a protrusion protruding toward the first lens, and the second coupling portion may be a protrusion protruding toward the second lens.

The first lens may include a first protrusion coupled to the first coupling portion, and the second lens may include a second protrusion coupled to the second coupling portion.

The first lens may include a first optical portion and a first flange portion extending from the first optical portion, the first protrusion being disposed on the first flange portion, and the second lens may include a second optical portion and a second flange portion extending from the second optical portion, the second protrusion being disposed on the second flange portion. The first coupling portion may be in contact with the first flange portion, and the second coupling portion may be in contact with the second flange portion. An optical axis of the plurality of lenses may be closer to the first coupling portion than to the first protrusion. The optical axis of the plurality of lenses may be closer to the second protrusion than to the second coupling portion. The optical axis of the plurality of lenses may be closer to the first coupling portion than to the second coupling portion.

A lens module according to still another embodiment includes a lens barrel, a plurality of lenses sequentially disposed in an optical-axis direction in the lens barrel, and an iris module disposed in the lens barrel. The iris module includes a carrier disposed between a first lens and a second lens adjacent to each other among the plurality of lenses and an iris unit disposed in the carrier and configured to vary an incident amount of incident light. The carrier includes a first carrier located on the iris unit and a second carrier located under the iris unit and coupled to the first carrier. The first carrier includes a first coupling portion to be coupled to the first lens, and the second carrier includes a second coupling portion to be coupled to the second lens.

The first lens may include a first protrusion to be coupled to the first coupling portion, and the second lens may include a second protrusion to be coupled to the second coupling portion.

A camera device according to an embodiment includes the lens module according to the embodiment, a lens moving device configured to move the lens module in the optical-axis direction, and an image sensor.

An iris module according to an embodiment includes a blade member, a ring-shaped magnetic member connected to the blade member and including a plurality of magnet units, a coil including a plurality of coil units corresponding to the plurality of magnet units and configured to move the magnetic member through interaction with the magnetic member, and a position sensor configured to detect displacement of the magnetic member. The position sensor includes a first sensor and a second sensor, and the first sensor and the second sensor overlap the plurality of magnet units in an optical-axis direction.

The first sensor may be disposed in a hollow portion in one of two coil units corresponding to two different magnet units among the plurality of magnet units, and the second sensor may be disposed in a hollow portion in the remaining one of the two coil units.

The first sensor and the second sensor may be located outside hollow portions in two coil units corresponding to two different magnet units among the plurality of magnet units.

When viewed from above, the position sensor may be located between an inner circumferential surface and an outer circumferential surface of the magnetic member. When viewed from above, the position sensor may be located closer to the outer circumferential surface than to the inner circumferential surface of the magnetic member. When viewed from above, the position sensor may be located to overlap the outer circumferential surface of the magnetic member in the optical-axis direction.

The iris module may include a fixing shaft coupled to the blade member and a driving shaft connecting the blade member to the magnetic member.

An iris module according to another embodiment includes a blade member, a ring-shaped magnetic member connected to the blade member, a coil configured to move the magnetic member through interaction with the magnetic member, and a position sensor configured to detect displacement of the magnetic member. When viewed from above, the position sensor may be disposed between an inner circumferential surface and an outer circumferential surface of the magnetic member. The position sensor may be located in a hollow portion in the coil. The position sensor may be located outside a hollow portion in the coil. The position sensor may be disposed closer to the outer side surface than to the inner side surface of the magnetic member.

The position sensor may overlap the outer side surface of the magnetic member in an optical-axis direction. The position sensor may include a first portion overlapping the magnetic member in an optical-axis direction and a second portion not overlapping the magnetic member in the optical-axis direction.

The iris module may include a fixing shaft coupled to the blade member and a driving shaft connecting the blade member to the magnetic member. When viewed from above, the position sensor may be located closer to the driving shaft than to the coil.

The iris module may include a circuit board electrically connected to the coil, and the position sensor may be disposed on the circuit board.

A lens module according to an embodiment may include a lens barrel, a plurality of lenses disposed in an optical-axis direction in the lens barrel, and the iris module according to the embodiment. The iris module may be disposed between two adjacent lenses among the plurality of lenses.

### [Advantageous Effects]

In embodiments, self-alignment between lenses may be performed using an iris module.

In embodiments, because the iris module is located in a lens barrel and is located between the lenses, a required size of an aperture of a blade member of the iris module may be designed to be small, and the size of the iris module may be reduced.

In embodiments, a size varying speed of the aperture of the blade member may be increased, and the performance of a camera may be improved.

In embodiments, the thickness of a blade may be reduced, and sagging of the blade may be prevented.

In embodiments, the aperture of the iris module may be designed to be small, and accordingly, a TTL of a lens module may be reduced.

In embodiments, because a magnetic member is sensed using a plurality of position sensors, the size of an aperture of an iris unit for a large-diameter lens may be precisely varied to a desired value.

In embodiments, because the position sensor is disposed far away from a coil, an influence of a magnetic field of the coil on the position sensor may be reduced, and accordingly, the performance of the position sensor may be improved.

### [Description of Drawings]

FIG. 1 is a cross-sectional view of a camera device according to an embodiment.
FIG. 2A is an exploded perspective view of an iris module of the camera device shown in FIG. 1.
FIG. 2B is an exploded perspective view of the iris module viewed from a different direction from FIG. 2A.
FIG. 3 is a cross-sectional view of the iris module.
FIG. 4A is a coupling view of a magnetic member and a blade member.
FIG. 4B is a perspective view of a magnetic member and a blade member according to another embodiment.
FIG. 5A shows arrangement of a magnetic member, a coil, and a driving shaft according to an embodiment.
FIG. 5B shows arrangement of a magnetic member, a coil, and a driving shaft according to another embodiment.
FIG. 6 is an enlarged view of lenses and the iris module.
FIG. 7 is a cross-sectional view of a lens moving device, an image sensor, a circuit board, and a sensor base according to an embodiment.
FIGs. 8A to 8E show a method of manufacturing a lens module of the camera device according to an embodiment.
FIG. 9A is an exploded perspective view of an iris module according to another embodiment of the camera device.
FIG. 9B is an exploded perspective view of the iris module shown in FIG. 9A viewed from another direction.
FIG. 10A is a perspective view of an iris module according to still another embodiment.
FIG. 10B is a perspective view of the iris module shown in FIG. 10A viewed from another direction.
FIG. 11 shows arrangement of an iris unit according to another embodiment.
FIG. 12A is a plan view of a magnetic member, a coil, and a position sensor according to an embodiment.
FIG. 12B shows arrangement of a position sensor according to another embodiment.
FIG. 12C shows arrangement of a position sensor according to still another embodiment.
FIG. 12D shows arrangement of position sensors according to still another embodiment.
FIG. 12E shows arrangement of position sensors according to still another embodiment.
FIG. 12F shows arrangement of position sensors according to still another embodiment.
FIG. 13A shows arrangement of a position sensor according to still another embodiment.
FIG. 13B shows arrangement of a position sensor according to still another embodiment.
FIG. 13C shows arrangement of a position sensor according to still another embodiment.
FIG. 14A shows polarities of a magnet unit according to an embodiment.
FIG. 14B shows polarities of a magnet unit according to another embodiment.
FIG. 14C shows polarities of a magnet unit according to still another embodiment.
FIG. 15A shows arrangement of a sensing magnet and the position sensor.
FIG. 15B shows another embodiment of the sensing magnet shown in FIG. 15A.
FIG. 16A is a perspective view of an optical instrument according to an embodiment.
FIG. 16B is a perspective view of an optical instrument according to another embodiment.
FIG. 17 is a configuration diagram of the optical instruments shown in FIGs. 16A and 16B.

### [Best Mode]

Hereinafter, embodiments of the present disclosure, which may concretely realize the aspects described above, will be described with reference to the accompanying drawings.

In the following description of the embodiments, it will be understood that, when each element is referred to as being "on" or "under" another element, it can be directly on or under the other element, or can be indirectly formed such that one or more intervening elements are also present. In addition, when an element is referred to as being "on or under," "under the element" as well as "on the element" may be included based on the element.

In addition, the relational terms "first," "second," "on/upper part/above," and "under/lower part/below" are used herein only to distinguish between one subject or element and another subject or element without necessarily requiring or involving any physical or logical relationship or sequence between such subjects or elements. Wherever possible, the same reference numerals will be used throughout the drawings to refer to the same parts.

Additionally, the terms "comprises," "includes," and "has" described herein should be interpreted not to exclude other elements but to further include such other elements, since the corresponding elements may be inherent unless mentioned otherwise. In addition, the term "corresponding to" described herein may encompass at least one of the meanings of "facing" and "overlapping."

Hereinafter, a camera device and an optical instrument including the same according to embodiments will be described with reference to the accompanying drawings. For convenience of description, a camera device according to an embodiment will be described using the Cartesian coordinate system (x, y, z), but the embodiments are not limited thereto, and may be described using other coordinate systems. In each of the drawings, the X-axis and the Y-axis may be axes extending in directions perpendicular to the Z-axis, which is an optical-axis direction OA.

In addition, the Z-axis direction corresponding to the optical-axis direction may be referred to as "any one of the first to third directions," the X-axis direction may be referred to as "another one of the first to third directions," and the Y-axis direction may be referred to as "the remaining one of the first to third directions." For example, the first direction may be a direction perpendicular to an imaging region of an image sensor.

In addition, the X-axis (or the Y-axis) may be referred to as a "first horizontal axis," the X-axis (or Y-axis) direction may be referred to as a "first horizontal direction," the Y-axis (or the X-axis) may be referred to as "a second horizontal axis," and the Y-axis (or X-axis) direction may be referred to as a "second horizontal direction."

For example, the optical-axis direction may be a direction of an optical axis or a direction parallel to the optical axis. In addition, for example, the optical axis may be an optical axis of a lens mounted in a lens barrel. Alternatively, for example, the optical axis may be an axis perpendicular to an imaging region of an image sensor and passing through a center of the imaging region. In addition, hereinafter, the "terminal" may alternatively be referred to as a pad, an electrode, or a conductive layer.

In addition, in the embodiments, when two components are coupled to each other through coupling between a protrusion and a hole, one of the components may be a coupling protrusion (or a coupling hole), and the remaining one of the components may be a coupling hole (or a coupling protrusion) corresponding thereto.

A camera device according to an embodiment may perform a hand-tremor compensation function and an autofocus function.

The "hand-tremor compensation function" may be a function of moving a lens in a direction perpendicular to the optical-axial direction or tilting the lens with respect to the optical axis in order to cancel vibration (or motion) caused by shaking of the user's hands.

In addition, the "autofocus function" may be a function of automatically focusing on a subject by moving the lens in the optical-axis direction according to a distance to the subject so that an image sensor obtains a clear image of the subject. Hereinafter, the "camera device" may alternatively be referred to as a "camera," an "actuator," a "camera module," an "image-capturing device," or a "photographing device."

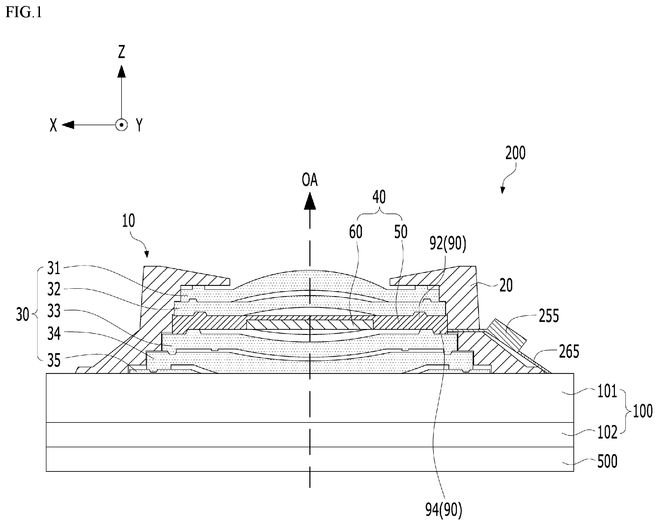

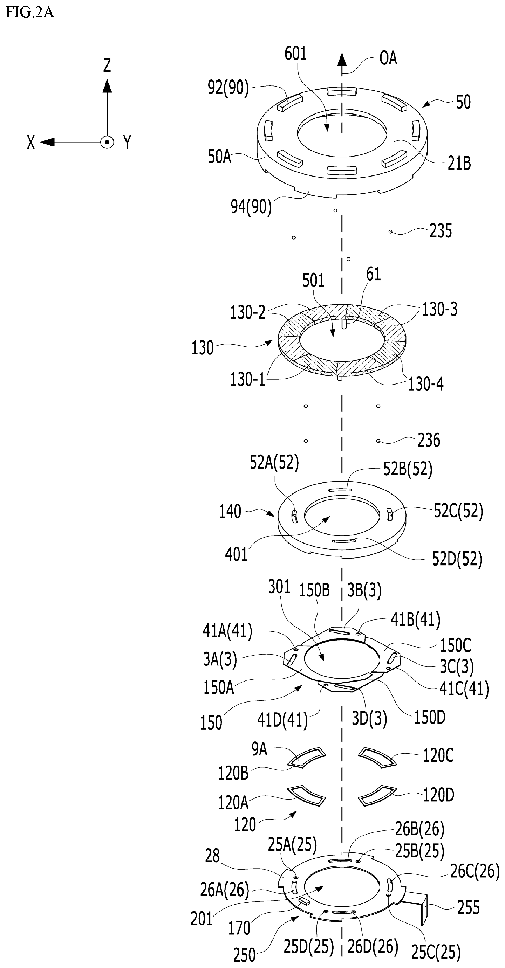

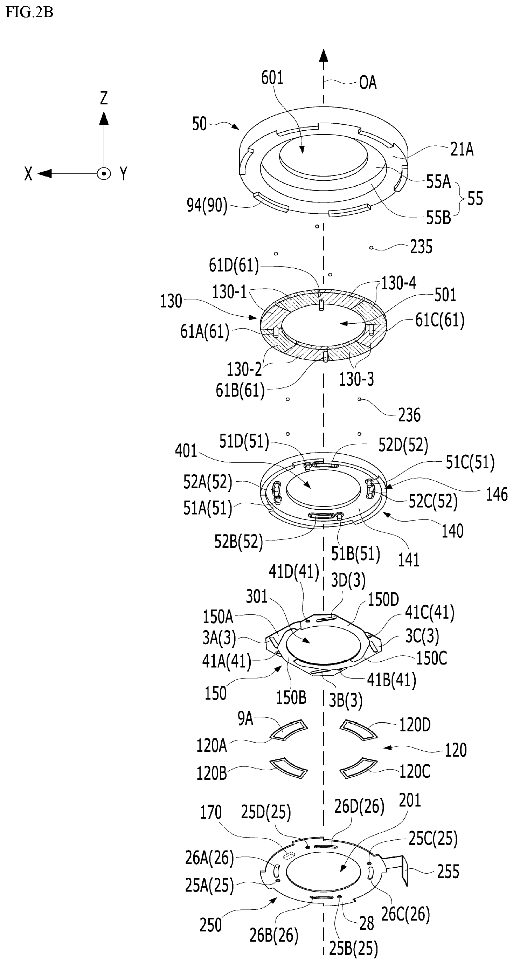

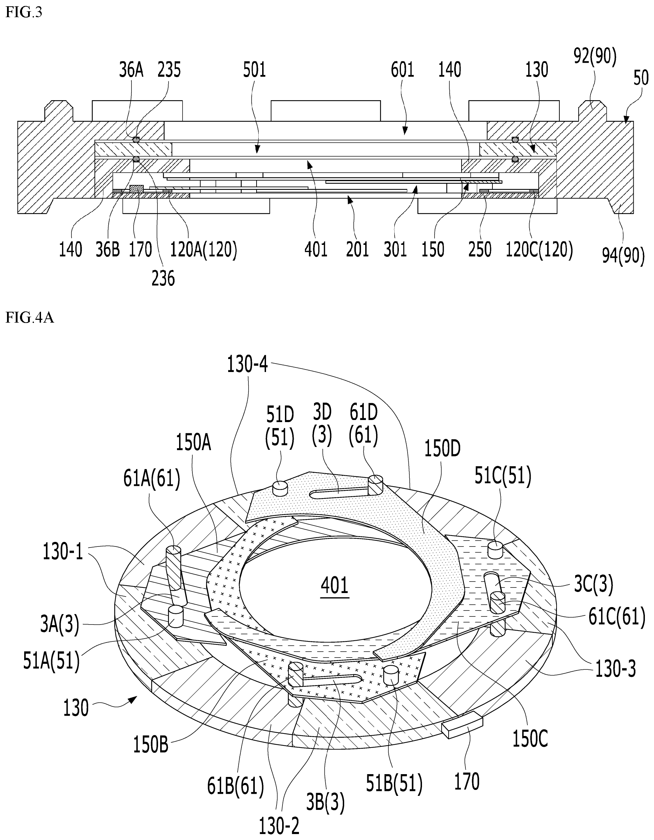

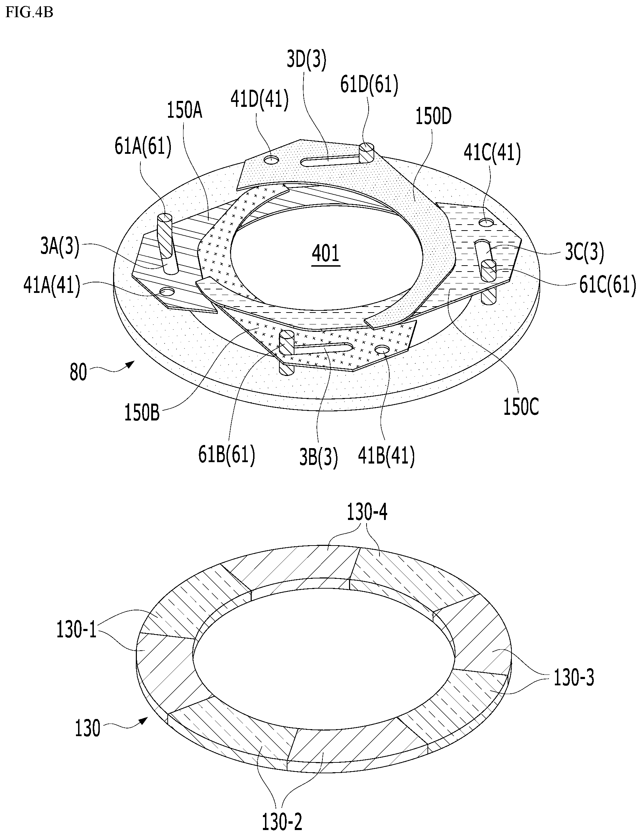

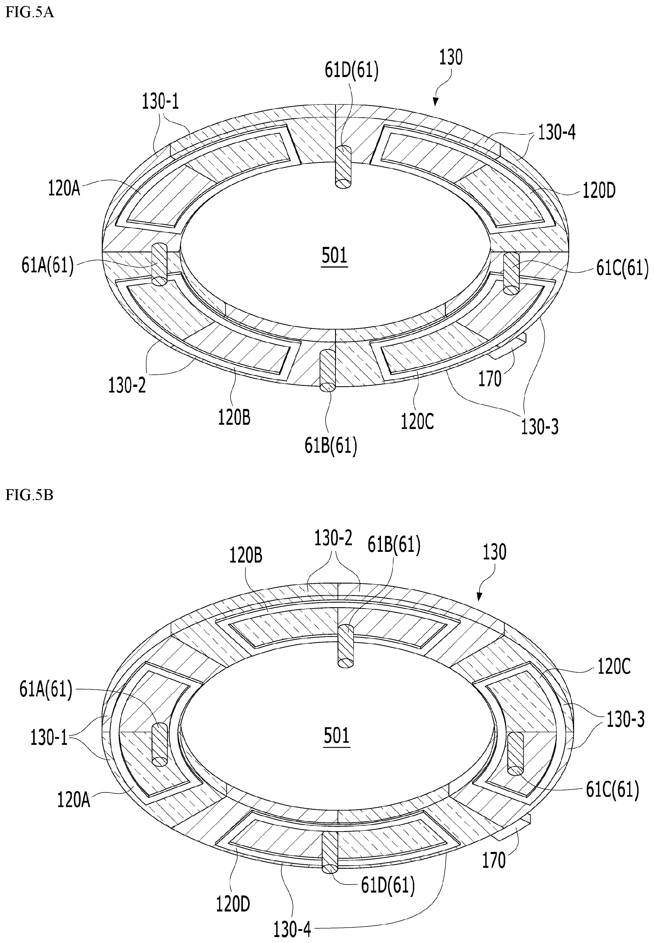

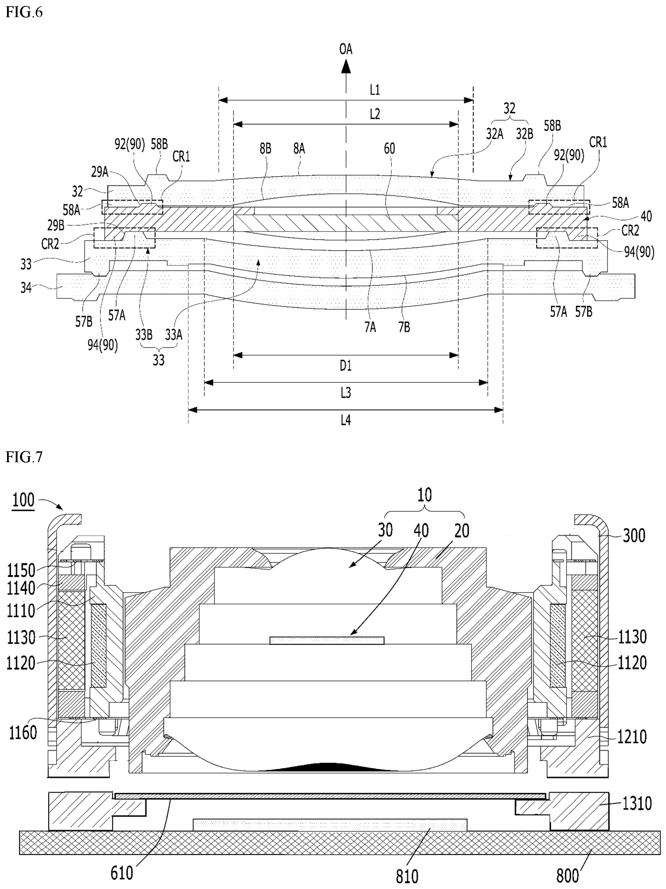

FIG. 1 is a cross-sectional view of a camera device 200 according to an embodiment, FIG. 2A is an exploded perspective view of an iris module 40 of the camera device 200 shown in FIG. 1, FIG. 2B is an exploded perspective view of the iris module 40 viewed from a different direction from FIG. 2A, FIG. 4A is a coupling view of a magnetic member 130 and a blade member 150, FIG. 4B is a perspective view of the magnetic member 130 and the blade member 150 according to another embodiment, FIG. 5A shows arrangement of the magnetic member 130, a coil 120, and a driving shaft 61 according to an embodiment, FIG. 5B shows arrangement of the magnetic member 130, the coil 120, and the driving shaft 61 according to another embodiment, and FIG. 6 is an enlarged view of lenses 32, 33, and 34 and the iris module 40. FIG. 7 is a cross-sectional view of a lens moving device 100, an image sensor 810, a circuit board 800, and a sensor base 1310 according to an embodiment.

Referring to FIGs. 1 to 7, the camera device 200 may include a lens module 10. In addition, the camera device 200 may include a lens moving device 100 disposed under the lens module 10. The lens module 10 may be coupled to the lens moving device 100. The lens moving device 100 may move the lens module 10 in the optical-axis direction. The camera device 200 may include a sensor unit 500 disposed under the lens moving device 100. For example, light having passed through the lens module 10 may be incident on the sensor unit 500.

The lens module 10 may alternatively be referred to as a "lens-iris assembly" or a "lens module (or lens unit) including a variable iris."

The lens moving device 100 may perform an autofocus operation. For example, the lens moving device 100 may include an "autofocusing unit 101" to perform the autofocus operation. The autofocusing unit 101 may move the lens module 10 in the optical-axis direction.

The lens moving device 100 may include an optical image stabilization (OIS) unit 102 to perform an OIS operation for hand-tremor compensation. The OIS unit 102 may move the lens module 10 in a direction perpendicular to the optical axis.

The lens module 10 may include a lens barrel 20, a lens unit 30, and an iris module 40. The lens barrel 20 may be coupled to the lens unit 30. The lens barrel 20 may include an internal space defined therein to receive the lens unit 30. For example, the lens barrel 20 may include an opening or a through-hole.

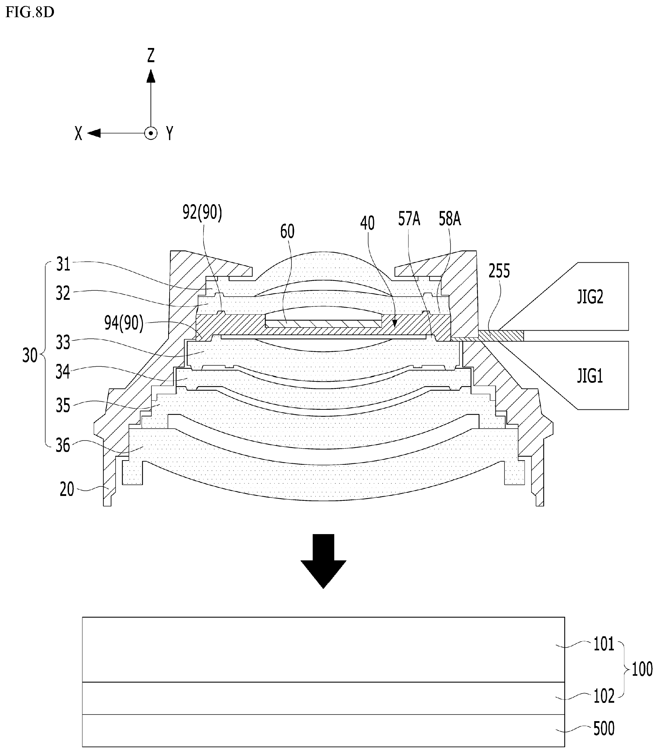

The lens unit 30 may be disposed in the lens barrel 20. The lens unit 30 may be coupled to the lens barrel 20. The lens unit 30 may include a plurality of lenses 31 to 36 (see FIG. 8D). The lens 36 shown in FIG. 8D is not shown in FIG. 1.

The plurality of lenses 31 to 36 may be sequentially disposed or arranged in the optical-axis direction in the lens barrel 20. Alternatively, the lenses 31 to 36 may be stacked in the optical-axis direction. As shown in FIG. 8D, the lens unit 30 includes six lenses 31 to 36. However, in another embodiment, the lens unit 30 may include two lenses, three lenses, four lenses, five lenses, or seven or more lenses.

Each of the plurality of lenses 31 to 36 may include a coupling portion (or a protrusion) for alignment or self-alignment. In this case, the coupling portion of each lens may alternatively be referred to as a protrusion, an alignment protrusion, or a self-alignment protrusion.

For example, each of the plurality of lenses 31 to 36 may include a first alignment protrusion protruding upward and a second alignment protrusion protruding downward.

The iris module 40 may selectively adjust or change an amount of light or an incident amount of light entering the camera device 200. For example, the iris module 40 may adjust or change an incident amount of light entering the lenses (e.g., 33 and 34) of the lens unit 30 disposed under the iris module 40.

The iris module 40 may be disposed between two adjacent lenses 32 and 33 among the plurality of lenses 31 to 36.

As shown in FIG. 1, the iris module 40 is located between the second lens 32 and the third lens 33 from an uppermost side. However, in another embodiment, the iris module 40 may be located between the uppermost lens 31 and the lens 32. In still another embodiment, the iris module 40 may be located between the lens 33 and the lens 34.

For example, the uppermost side of the lens unit 30 may be an object side or a side closest to a subject. In addition, the lowermost side of the lens unit 30 may be an image side or a side closest to an image sensor.

In addition, the iris module 40 may include a coupling portion 90 that is coupled to the lens unit 30. For example, the iris module 40 may include a coupling portion 90 that is coupled to the lens unit 30 to be aligned or self-aligned with the lens unit 30.

For example, the iris module 40 may include a coupling portion 90 to be aligned or self-aligned with at least one lens among two adjacent lenses 32 and 33. In this case, the at least one lens may include a protrusion that is coupled to or in contact with the coupling portion 90. In addition, the coupling portion 90 may overlap the protrusion of the at least one lens in a direction perpendicular to the optical-axis direction.

The coupling portion 90 may alternatively be referred to as an "alignment coupling portion," a "self-alignment coupling portion," or an "aligning coupling portion." The coupling portion 90 may be coupled to coupling portions (or self-alignment coupling portions) of adjacent lenses 32 and 33. The adjacent lenses 32 and 33 may be self-aligned with each other through coupling between the coupling portion 90 of the iris module 40 and the coupling portions 57 and 58 of the lenses 32 and 33.

The iris module 40 may not only adjust an amount of incident light but also enable the adjacent lenses 32 and 33 to be aligned or self-aligned with each other. For example, the iris module 40 may serve to enable the adjacent lenses 32 and 33 to be located at preset positions.

The iris module 40 may include a carrier 50 and an iris unit 60 disposed in the carrier 50. The iris unit 60 may include an iris configured to vary an amount of incident light. The iris unit 60 may alternatively be referred to as a "variable iris unit" or a "variable iris."

The carrier 50 may have a shape capable of receiving the iris unit 60. The carrier 50 may alternatively be referred to as a holder, a case, a cover, or a frame.

For example, the carrier 50 may be box-shaped. For example, the carrier 50 may have a box shape having an open lower side.

For example, the carrier 50 may include a body 50A and a coupling portion 90 connected to the body 50A. For example, the coupling portion 90 may extend or protrude from the body 50A. The coupling portion 90 may have a protrusion shape. In another embodiment, the coupling portion 90 may have a recess shape.

The carrier 50 may include an opening 601. The opening 601 may be a hollow portion. In addition, the opening 601 may be a hole that penetrates the carrier 50 in the optical-axis direction. The carrier 50 will be described later in detail.

The iris unit 60 may include a blade member 150 having a variable aperture 301. The blade member 150 may adjust the size of the aperture 301 through which light is incident. The aperture 301 of the blade member 150 may correspond to, face, or overlap the lens unit 30 or the opening 601 in the carrier 50 in the optical-axis direction.

The blade member 150 may include a plurality of blades 150A to 150D. The number of blades may be two, three, or five or greater. The plurality of blades 150A to 150D may form the aperture 301. For example, the plurality of blades 150A to 150D may be disposed to at least partially overlap each other in the optical-axis direction, thereby forming the aperture 301. For example, at least a portion of the inner circumferential surface of each of the blades 150A to 150D may include a curved or concave portion. For example, the curved or concave portions of the blades 150A to 150D may be disposed in a rounded shape toward the optical axis. The shape of the aperture 301 viewed from above or in the optical-axis direction may be circular, elliptical, or polygonal (e.g., triangular, quadrangular, pentagonal, or hexagonal).

The blade member 150 may include a hole 3 to be coupled to the driving shaft 61. The hole 3 in the blade member 150 may be coupled or connected to a moving unit of the iris module 40. The blade member 150 may include a hole 41 to be coupled to a fixing shaft 51. The hole 41 in the blade member 150 may be coupled or connected to a fixed unit of the iris module 40.

In the iris module 40, the "moving unit" may be an element or a component that moves to drive the blade member 150. The "moving unit" may include a magnetic member 130. In another embodiment, the "moving unit" may include another component (e.g., a mover plate) coupled to the magnetic member 130.

In addition, the driving shaft 61 may be included in the moving unit of the iris module 40. In addition, in the iris module 40, the "fixed unit" may be an element or a component that does not move together with the moving unit of the iris module 40. The "fixed unit" in the iris module 40 may be a fixed element or a fixed component that remains stationary when the blade member 150 is driven. For example, the carrier 50, the housing 140, the circuit board 250, and the coil 120 may be included in the fixed unit of the iris module 40. A portion of the blade member 150 (e.g., a first portion) may be connected to the fixed unit (e.g., the housing 140), and another portion of the blade member 150 (e.g., a second portion) may be connected to the moving unit (e.g., the driving shaft 61).

The hole 3 in the blade member 150 may alternatively be referred to as a "driving-shaft hole," a "coupling hole," a "guide hole," or a first hole (or a second hole). The hole 41 in the blade member 150 may alternatively be referred to as a "rotation-shaft hole," a "coupling hole," a "fixing-shaft hole," or a second hole (or a first hole).

The plurality of blades 150A to 150D may move. Alternatively, the plurality of blades 150A to 150D may move or rotate within preset ranges. The size (e.g., diameter) of the aperture 301 may be varied by movement or motion of the plurality of blades 150A to 150D. The aperture 301 may alternatively be referred to as a "hollow portion," an "incident opening," or an "incident hole." Apertures 301 having different sizes may be implemented by controlling movement of the blades 150A to 150D.

For example, the maximum size of the aperture 301 may be 60 percent (%) or greater and 90 percent (%) or less of the effective diameter of the "lens." Alternatively, for example, the maximum size of the aperture 301 may be 70 percent (%) or greater and 80 percent (%) or less of the effective diameter of the "lens." In this case, the "lens" may be the first lens 31 located at the uppermost side. In another embodiment, the "lens" may be a lens (e.g., the lens 32) located directly on the iris module 40.

In addition, for example, the minimum size of the aperture 301 may be 30 percent (%) or greater and less than 60 percent (%) of the effective diameter of the "lens." Alternatively, for example, the minimum size of the aperture 301 may be 30 percent (%) or greater and 40 percent (%) or less of the effective diameter of the "lens."

The size of the aperture 301 of the iris module 40 is related to a position at which the iris module 40 is disposed between the plurality of lenses. That is, the maximum size and the minimum size of the aperture 301 of the iris module 40, the effective diameter of the lens, and the placement position of the iris module 40 need to be designed so that brightness of light (or maximum brightness of light) incident on the lens unit 30 is not reduced and has a desired value.

Based on the above-described relationship conditions between the maximum size (or minimum size) of the aperture 301 and the effective diameter of the lens, a design in which brightness of light (or maximum brightness of light) incident on the lens unit 30 is not reduced may be achieved when the iris module 40 is located between the second lens 32 and the third lens 33 from the uppermost side.

In addition, when the iris module 40 is located between the lens 32 and the third lens 33, the size of the aperture 301 of the iris module 40 may be designed to be small without reducing brightness of light (or maximum brightness of light) incident on the lens unit 30. As a result, the size of the iris module 40 may be reduced, and the size of the lens module 10 may be reduced.

However, in other embodiments, although a difference in reduction of brightness of light may occur, the iris module 40 may be located between two adjacent lenses located at other positions.

Referring to FIG. 3, a lower surface of a second coupling portion 94 of the iris module 40 may be located lower than a lowermost portion, a lowermost surface, or a lowermost end of the blade member 150. Alternatively, for example, the second coupling portion 94 may be located below the blade member 150. For example, the second coupling portion 94 may not overlap the blade member 150 in a direction perpendicular to the optical-axis direction.

For example, the lens 36 located at the lowermost side among the plurality of lenses 31 to 36 may be located closer to the second coupling portion 94 than to the blade member 150. For example, the lens 36 located at the lowermost side among the plurality of lenses 31 to 36 may be located closer to a lower surface of the second coupling portion 94 than to a lower surface of the blade member 150.

The iris unit 60 may include a driving unit that drives or moves the blade member 150. The driving unit of the iris unit 60 may include a coil 120 disposed on or coupled to the fixed unit of the iris module 40 and a magnetic member 130 that moves the blade member 150 through interaction with the coil 120. For example, the magnetic member 130 may be a magnet.

For example, the magnetic member 130 may move or may rotate within a preset range about the optical axis through interaction with the coil 120.

The magnetic member 130 may face or overlap the coil 120 in the optical-axis direction. The magnetic member 130 may include at least one N pole and at least one S pole.

The magnetic member 130 may include a plurality of magnet units 130-1 to 130-4. The magnet units may alternatively be referred to as "magnet portions." As shown in FIG. 2B, the magnetic member 130 includes four magnet units. However, in another embodiment, the magnetic member 130 may include one magnet unit, two magnet units, three magnet units, or five or more magnet units. For example, the number of magnet units may be the same as the number of coil units of the coil 120. In addition, for example, the number of magnet units may be the same as the number of blades. In another embodiment, the number of magnet units may be different from the number of blades.

For example, each of the magnet units 130-1 to 130-4 may include one N pole and one S pole. As shown in FIG. 2B, the N pole and the S pole of each magnet unit may be disposed to face each other or be separated from each other in a direction perpendicular to the optical axis. For example, the N pole and the S pole of the magnet unit may be disposed to face each other or be separated from each other in the circumferential direction of the magnetic member 130 or in a direction perpendicular to the direction in which an inner circumferential surface (or an inner side surface) and an outer circumferential surface (or an outer side surface) of the magnetic member 130 face each other. Alternatively, in another embodiment, the N pole and the S pole of the magnet unit may be disposed to face each other or be separated from each other in the direction in which the inner circumferential surface (or the inner side surface) and the outer circumferential surface (or the outer side surface) of the magnetic member 130 face each other.

In another embodiment, the N pole and the S pole of each magnet unit may be disposed to face each other or be separated from each other in the optical-axis direction.

For example, the magnetic member 130 may have a ring shape including a hollow portion 501 or an opening. When viewed from above or in the optical-axis direction, the magnetic member 130 may have a ring shape. Alternatively, for example, when viewed from above or in the optical-axis direction, the magnetic member 130 may have an annular shape.

Because the magnetic member 130 has a ring shape, the magnetic member 130 may be easily rotated about the optical axis. For example, the ring may have a circular, elliptical, or polygonal (e.g., triangular, quadrangular, or pentagonal) shape.

The hollow portion 501 in the magnetic member 130 may overlap the optical axis. At least part of the hollow portion 501 in the magnetic member 130 may face or overlap the hollow portion 201, 301, 401, or 601 in the optical-axis direction. For example, the hollow portions 201, 301, 401, and 601 may face each other or at least partially overlap each other in the optical-axis direction.

In another embodiment, when viewed from above or in the optical-axis direction, an outer shape of the magnetic member 130 may be circular, elliptical, or polygonal (e.g., quadrangular or triangular).

For example, the magnetic member 130 may include a hollow portion or a through-hole. In addition, for example, the magnet units 130-1 to 130-4 may be in contact with each other. For example, the magnet units 130-1 to 130-4 may contact each other in a ring shape. For example, portions of two adjacent magnet units that are in contact with each other may have opposite polarities.

In another embodiment, each of the magnet units 130-1 to 130-4 may be a four-pole magnet. The four-pole magnet may include two N poles and two S poles.

For example, the magnet units 130-1 to 130-4 may be disposed or arranged in the circumferential direction of the ring-shaped magnetic member 130. The magnet units 130-1 to 130-4 may have a single ring shape formed integrally.

For example, because the magnet units 130-1 to 130-4 have a single ring shape formed integrally, the magnet units 130-1 to 130-4 may increase driving force generated by electromagnetic force with the coil 120. In addition, because the magnet units 130-1 to 130-4 have a single ring shape formed integrally, the magnet units 130-1 to 130-4 may move together simultaneously. Accordingly, the blades 150A to 150D may also move together simultaneously. Because the blades 150A to 150D move together simultaneously, uniform and stable movement may be achieved, and movement deviation between the blades 150A to 150D may be eliminated or reduced. Because movement deviation between the blades 150A to 150D is eliminated, a desired shape of the aperture 301 may be easily obtained without error.

In the embodiment, the number of magnet units 130-1 to 130-4 may be the same as the number of driving shafts 61. However, in another embodiment, because the magnet units 130-1 to 130-4 have a single ring shape formed integrally, the number of magnet units 130-1 to 130-4 may be different from the number of driving shafts 61 or the number of blades. For example, the number of magnet units 130-1 to 130-4 may be less than the number of driving shafts 61. For example, the number of magnet units 130-1 to 130-4 may be less than the number of blades.

In another embodiment, the magnet units 130-1 to 130-4 may be spaced apart from each other. For example, the magnet units 130-1 to 130-4 may be disposed to be spaced apart from each other in the circumferential direction of the ring-shaped magnetic member 130.

The iris unit 60 may include a fixing shaft 51 that is connected or coupled to the blade member 150. For example, the iris unit 60 may include a housing 140 including the fixing shaft 51.

The fixing shaft 51 may be disposed on a surface of the housing 140 facing the blade member 150 (a lower surface 141 of the housing 140 based on FIG. 2A). The fixing shaft 51 may alternatively be referred to as a "rotation shaft," a "pillar portion," a "protrusion," or a "coupling shaft." For example, the fixing shaft 51 may have a cylindrical shape or a rod shape.

For example, the fixing shaft 51 may protrude from a surface of the housing 140 (e.g., the lower surface 141 of the housing 140). For example, the fixing shaft 51 may be a protrusion or a protruding portion protruding from a surface of the housing 140 (e.g., the lower surface 141 of the housing 140).

The fixing shaft 51 may be coupled to the hole 41 in the blade member 150. For example, the fixing shaft 51 may be inserted or fitted into the hole 41 in the blade member 150. In order to facilitate rotation, a lubricant or grease may be disposed on the fixing shaft 51 and in the hole 41 in the blade member 150.

The fixing shaft 51 may include fixing shafts 51A to 51D corresponding to the blades 150A to 150D. For example, the number of fixing shafts 51 may be the same as the number of blades. For example, each of the fixing shafts 51A to 51D may be inserted or fitted into a corresponding one of holes 41A to 41D in the blades 150A to 150D.

The iris unit 60 may include a driving shaft 61 that is connected or coupled to the moving unit (e.g., the magnetic member 130) and moves the blade member 150. The driving shaft 61 may alternatively be referred to as a "moving shaft," a "pillar portion," a "protrusion," or a "connection shaft." For example, the driving shaft 61 may have a cylindrical shape or a rod shape.

The iris unit 60 may include driving shafts 61A to 61D corresponding to the blades 150A to 150D. For example, the number of driving shafts 61 may be the same as the number of blades.

FIG. 4A shows an embodiment in which the driving shaft 61 is directly coupled to the magnetic member 130. In the embodiment shown in FIG. 4B, the iris unit 60 may include a mover plate 80 that includes a driving shaft 61 and is formed to allow the magnetic member 140 to be disposed thereon, seated thereon, or coupled thereto. The mover plate 80 may alternatively be referred to as a "mover," a "moving ring," a "moving frame," a "frame," a "rotator," a "rotating ring," a "rotating plate," or a "rotating frame."

For example, the mover plate 80 may include a body 81 and a driving shaft 61 protruding or extending from the body 81. The driving shaft 61 may protrude or extend from the body 81 toward the blade member 150.

The mover plate 80 (or the body 81) may have a ring shape to facilitate rotation. The mover plate 80 may have a circular ring shape. For example, the body 81 may have a shape corresponding to or matching the shape of the magnetic member 130.

Referring to FIGs. 2A and 4B, the magnetic member 130 may be coupled to the mover plate 80. For example, the magnetic member 130 may be disposed on a second surface (e.g., an upper surface) of the mover plate 80, which is opposite a first surface (e.g., a lower surface) of the mover plate 80 on which the driving shaft 61 is disposed.

The mover plate 80 may include a seating portion formed to allow the magnetic member 130 to be seated thereon, disposed thereon, or inserted thereinto. For example, the seating portion may be formed on the second surface (e.g., the upper surface) of the mover plate 80. For example, the seating portion of the mover plate 80 may be a recess, and the magnetic member 130 may be disposed in or coupled to the seating portion of the mover plate 80. As shown in FIG. 4B, the driving shaft 61 and the magnetic member 130 may be spaced apart from each other.

Compared with the embodiment shown in FIG. 4A, the mover plate 80 may increase coupling force between the magnetic member 130 and the driving shaft 61 and may enable stable rotation of the blades 150A to 150D. In addition, a rolling member 236 may be disposed between the mover plate 80 and the housing 140. The rolling member 236 may be in contact with the mover plate 80 without directly contacting the magnetic member 130, thereby preventing damage to the magnetic member 130 caused by friction with the rolling member 236.

However, compared with the embodiment shown in FIG. 4B, because the embodiment shown in FIG. 4A does not have the mover plate 80, the weight of the moving unit may be reduced, thereby reducing driving force required to rotate the blade member and reducing power consumption. In addition, because driving force required to rotate the blade member is small, the size of the magnetic member and the size of the coil may be reduced, and accordingly, the size of the iris module may be reduced.

For example, one end of the driving shaft 61 may be coupled to the moving unit (e.g., the magnetic member 130). The driving shafts 61A to 61D may be inserted or fitted into the holes 3 (or the driving-shaft holes) in the blades 150A to 150D. For example, the other end of each of the driving shafts 61A to 61D may be inserted or fitted into a corresponding one of the holes 3A to 3D in the blades 150A to 150D.

The blade member 150 may be allowed only to rotate about the fixing shaft 51 in the state in which the hole 41 in the blade member 150 is fitted onto the fixing shaft 51. The hole 3 in the blade 150 may extend in one direction to allow the driving shaft 61 to move in the state in which the driving shaft 61 is fitted into the hole 3 in the blade member 150. For example, the hole 3 may extend in a direction intersecting the rotation direction of the blade member 150 about the fixing shaft 51.

As the moving unit (e.g., the magnetic member 130) moves or rotates, the driving shafts 61A to 61D fitted into the holes 3A to 3D in the blades 150A to 150D may move. As the driving shafts 61A to 61D move, the blades 150A to 150D may close toward the optical axis or may open outward.

The blade member 150 may be disposed under the housing 140. For example, the housing 140 may be disposed between the blade member 150 and the magnetic member 130.

The housing 140 may be disposed in a cavity 44 in the carrier 50. The housing 140 may be coupled to the carrier 50. For example, the housing 140 may be coupled to the carrier 50 using an adhesive. Alternatively, for example, the housing 140 may be fixed to the carrier 50. The housing 140 may include a hollow portion 401.

For example, the housing 140 may include a hole 52 through which the driving shaft 61 passes. The hole 52 may be a through-hole penetrating the housing 140 in the optical-axis direction. In another embodiment, the housing 140 may include an escape portion, instead of the through-hole 52, to avoid spatial interference with the driving shaft 61. The escape portion may be a recess in which a portion of the housing 140 is depressed or may be a chamfered portion in which a portion of the housing 140 is chamfered.

The iris unit 60 may include a circuit board 250 electrically connected to the coil 120. The circuit board 250 may include an opening 201. The opening 201 may be a hollow portion or a through-hole. The opening 201 may penetrate the circuit board 250 in the optical-axis direction.

Referring to FIG. 2A, the circuit board 250 may be disposed under the housing 140. For example, referring to FIG. 2A, the circuit board 250 may be disposed under the blade member 150.

The circuit board 250 may be coupled to the housing 140. The circuit board 250 may be fixed to the housing 140. For example, the circuit board 250 may be spaced apart from the blade member 150.

The circuit board 250 may include a coupling portion 25 to be coupled to the fixing shaft 51 of the housing 140. The coupling portion 25 may face or overlap the fixing shaft 51 in the optical-axis direction. The coupling portion 25 may be a hole or a through-hole penetrating the circuit board 250 (or a body 251). In another embodiment, the coupling portion 25 may be a recess. The coupling portion 25 may include a plurality of coupling portions 25A to 25D corresponding to the plurality of fixing shafts 51A to 51D.

In another embodiment, the coupling portion 25 may not be coupled to the fixing shaft 51, and the housing 140 may include a coupling portion (or a protrusion), separate from the fixing shaft 51, to be coupled to the coupling portion 25 of the circuit board 250.

The circuit board 250 may include an escape portion 26 to avoid spatial interference with the driving shaft 61. The escape portion 26 serves to prevent the circuit board 250 from interfering with movement of the driving shaft 61. For example, the escape portion 26 may be a hole or a through-hole. For example, the escape portion 26 may penetrate the circuit board 250 in the optical-axis direction. In another embodiment, the escape portion 26 may be a recess in which a portion of the circuit board 250 is depressed. The escape portion 26 may have a shape and a size that provide sufficient clearance between the circuit board 250 and the driving shaft 61 within a movement range of the driving shaft 61.

The circuit board 250 may include a body 251 coupled to the housing 140 and having the opening 201 and a connecting portion 255 extending from the body 251 to be electrically connected to an external element or an external device. For example, the body 251 may be circular. In another embodiment, the body 251 may be elliptical or polygonal (e.g., quadrangular).

In addition, the circuit board 250 may include at least one protruding portion 28 extending from a side surface of the circuit board 250 (e.g., a side surface of the body 251). Referring to FIG. 2B, the circuit board 250 may include a plurality of protruding portions 28 spaced apart from each other.

The housing 140 may include at least one recess 146 formed therein to allow the at least one protruding portion 28 of the circuit board 250 to be coupled thereto, disposed therein, or inserted thereinto. The protruding portion 28 of the circuit board 250 and the recess 146 in the housing 150 may serve as coupling guides to facilitate coupling between the circuit board 250 and the housing 140. In addition, the protruding portion 28 of the circuit board 250 and the recess 146 in the housing 150 may prevent the circuit board 250 from being twisted or from being separated from the housing 140.

The coil 120 may be disposed on the circuit board 250. Referring to FIG. 2A, the coil 120 may be disposed on an upper surface of the circuit board 250. The coil 120 may be coupled to the upper surface of the circuit board 250. The coil 120 may be electrically connected to the circuit board 250 using solder or a conductive adhesive. The circuit board 250 may be a printed circuit board. The circuit board 250 may be a rigid board or a flexible board.

In another embodiment, the coil 120 may be disposed on a lower surface of the circuit board 250. For example, in another embodiment, the coil 120 may be located opposite the blade member 150 with respect to the circuit board 250.

The coil 120 may include a plurality of coil units 120A to 120D corresponding to the plurality of magnet units 130-1 to 130-4. Each of the plurality of coil units 120A to 120D may face or overlap a corresponding one of the magnet units 130-1 to 130-4 in the optical-axis direction.

Each of the plurality of coil units 120A to 120D may include a hollow portion 9A (see FIG. 2A). Each of the plurality of coil units 120A to 120D may have a ring shape wound around an axis parallel to the optical axis. In another embodiment, at least one of the coil units 120A to 120D may not include a hollow portion.

Referring to FIG. 5A, the coil units 120A to 120D may overlap both the N poles and the S poles of the magnet units 130-1 to 130-4 in the optical-axis direction or when viewed from above. The hollow portions 9A in the coil units 120A to 120D may overlap both the N poles and the S poles of the magnet units 130-1 to 130-4 in the optical-axis direction or when viewed from above in the optical-axis direction.

Each of the plurality of coil units 120A to 120D may overlap both the N pole and the S pole of a corresponding one of the magnet units 130-1 to 130-4 in the optical-axis direction or when viewed from above in the optical-axis direction.

The hollow portion 9A in each of the plurality of coil units 120A to 120D may overlap both the N pole and the S pole of a corresponding one of the magnet units 130-1 to 130-4 in the optical-axis direction or when viewed from above in the optical-axis direction.

The coil units 120A to 120D may include a first portion corresponding to the inner circumferential surface (or the inner side surface) of the magnetic member 130, a second portion corresponding to the outer circumferential surface (or the outer side surface) of the magnetic member 130, a third portion connecting one side of the first portion to one side of the second portion, and a fourth portion connecting the other side of the first portion to the other side of the second portion. For example, the first portion of the coil units 120A to 120D may include a curved portion or may have a bent shape. The first portion of the coil units 120A to 120D may have a sector-arc shape. For example, the second portion of the coil units 120A to 120D may include a curved portion or may have a bent shape. The second portion of the coil units 120A to 120D may have a sector-arc shape. For example, the length of the first portion may be less than the length of the second portion.

The driving shafts 61 may be located outside the hollow portions 9A in the coil units 120A to 120D. For example, the driving shafts 61 may be located between the coil units 120A to 120D.

The driving shafts 61 may not overlap the hollow portions 9A in the coil units 120A to 120D in the optical-axis direction. The driving shafts 61 may be located closer to the inner circumferential surface of the magnetic member 130 than to the outer circumferential surface of the magnetic member 130. In another embodiment, the driving shafts 61 may be located closer to the outer circumferential surface of the magnetic member 130 than to the inner circumferential surface of the magnetic member 130. In still another embodiment, the driving shafts 61 may be located at an intermediate position between the inner circumferential surface and the outer circumferential surface of the magnetic member 130.

Referring to FIG. 5B, in another embodiment, the driving shafts 61 may be located in the hollow portions 9A in the coil units 120A to 120D. The driving shafts 61 may overlap the hollow portions 9A in the coil units 120A to 120D in the optical-axis direction.

For example, the coil units 120A to 120D may be connected in series. The circuit board 250 may supply a driving signal to the coil 120. For example, a driving signal may be supplied to the coil units 120A to 120D connected in series.

In another embodiment, the coil units 120A to 120D may be connected in parallel, and a driving signal may be supplied to the coil units 120A to 120D connected in parallel.

In still another embodiment, the coil units 120A to 120D may be independent, that is, not connected to each other, and the circuit board 250 may supply separate independent driving signals to the respective coil units 120A to 120D. For example, each of the coil units 120A to 120D may be independently driven in response to the respective driving signal.

When a driving signal is supplied to the coil 120, the moving unit (e.g., the magnetic member 130) may rotate about the optical axis due to electromagnetic force generated by interaction between the magnetic member 120 and the coil 120. As the moving unit (the magnetic member 130) rotates, the blades 150A to 150D linked to the driving shafts 61 (or the blades 150A to 150D into which the driving shafts 61 are inserted) may rotate within a preset range about the fixing shaft 51 of the housing 140. As the blades 150A to 150D rotate, the size of the aperture 301 may be changed stepwise or continuously.

The iris unit 60 may include a position sensor 170 configured to detect displacement of the blade member 150. The position sensor 170 may detect a magnetic field of the magnetic member 130. Alternatively, the position sensor 170 may detect displacement or a position of the magnetic member 130. Alternatively, the position sensor 170 may detect displacement or a position of the driving shaft 61.

For example, the position sensor 170 may be disposed to face or overlap the magnetic member 130 in a direction perpendicular to the optical axis. In another embodiment, the position sensor 170 may be disposed to face or overlap the magnetic member 130 in the optical-axis direction.

The position sensor 170 may be disposed in the fixed unit of the iris module 40. The position sensor 170 may be disposed on the circuit board 250. For example, the position sensor 170 may be disposed on or coupled to the upper surface of the circuit board 250. The position sensor 170 may be electrically connected to the circuit board 250. In another embodiment, the position sensor 170 may be disposed on or coupled to the lower surface of the circuit board 250.

For example, in order to improve linearity of an output signal from the position sensor 170, the position sensor 170 may be disposed to correspond to, face, or overlap a boundary or a boundary line between the N pole and the S pole of any one of the magnet units 130-1 to 130-4. For example, at least a portion (e.g., center) of the position sensor 170 may be disposed to correspond to, face, or overlap the boundary or the boundary line between the N pole and the S pole of any one of the magnet units 130-1 to 130-4.

The position sensor 170 may include at least one sensor. The position sensor 170 may include at least one sensor that corresponds to, faces, or overlaps at least one (e.g., 130-1) of the plurality of magnet units 130-1 to 130-4. The position sensor 170 may include at least one sensor that is located in the opening in at least one (e.g., 120A) of the coil units 120A to 120D.

Referring to FIG. 3, an upper surface of the position sensor 170 may be located higher than an upper surface or an upper end of the coil unit 120A. Alternatively, the position sensor 170 may protrude upward beyond the upper surface or the upper end of the coil unit 120A. Accordingly, the position sensor 170 may be disposed close to the magnetic member 130, and the sensitivity and performance of the position sensor 170 may be improved.

The position sensor 170 may overlap the coil 120 (or the coil unit (e.g., 120A)) in a direction perpendicular to the optical axis. In another embodiment, the position sensor 170 may not overlap the coil 120 (or the coil unit (e.g., 120A)) in a direction perpendicular to the optical axis.

For example, the position sensor 170 may include two or more sensors. The position sensor 170 may include sensors corresponding to two or more of the plurality of magnet units 130-1 to 130-4. In this case, each sensor may be located in the opening in a coil unit corresponding to a corresponding magnet unit.

In another embodiment, the position sensor 170 may be disposed outside the opening in the coil unit.

For example, when viewed from above or in the optical-axis direction, at least a portion of the position sensor 170 may overlap the magnetic member 130 (or a corresponding magnet unit). In addition, the position sensor 170 may not overlap the magnetic member 130 (or a corresponding magnet unit) in a direction perpendicular to the optical axis.

In another embodiment, when viewed from above or in the optical-axis direction, the position sensor 170 may not overlap the magnetic member 130. In still another embodiment, the position sensor 170 may overlap the magnetic member 130 (or a corresponding magnet unit) in a direction perpendicular to the optical axis.

The position sensor 170 may be a Hall sensor. In this case, the position sensor 170 may include two input terminals to which a driving signal is applied and two output terminals from which an output signal is output. The circuit board 250 may be conductively or electrically connected to the two input terminals and the two output terminals of the position sensor 170. The circuit board 250 may supply the driving signal to the two input terminals of the position sensor 170 and may receive the output signal output from the two output terminals of the position sensor 170.

In another embodiment, the position sensor 170 may be a driver IC including a Hall sensor. In this case, the position sensor 170 may transmit and receive data to and from an external device through data communication using a protocol, such as I2C communication, and may supply a driving signal to the coil 120.

For example, when the position sensor 170 is a driver IC including a Hall sensor, the position sensor 170 may include first and second terminals to which power or a driving signal is input, a third terminal for a clock signal, a fourth terminal for a data signal, and fifth and sixth terminals for supplying the driving signal to the coil 120. The first to sixth terminals of the position sensor 170 may be conductively or electrically connected to the circuit board 250.

In another embodiment, the position sensor 170 may be an anisotropic magnetoresistive (AMR) sensor, a giant magnetoresistive (GMR) sensor, or a tunnel magnetoresistive (TMR) sensor.

The carrier 50 may accommodate the iris unit 60. For example, the iris unit 60 may be disposed in the carrier 50. The carrier 50 may alternatively be referred to as a "holder," a "cover," a "cover member," a "housing," a "frame," or a "base." The carrier 50 may be formed through an injection molding method using an injection mold. For example, the carrier 50 may be formed of an injection-molded material such as plastic or resin.

The carrier 50 may be disposed between two adjacent lenses among the plurality of lenses (e.g., 31 to 36). The carrier 50 may include an opening 601 that corresponds to, faces, or overlaps the lens unit 30. The opening 601 may be a through-hole penetrating the carrier 50 in the optical-axis direction.

The carrier 50 may include a cavity 55 to accommodate the iris unit 60. For example, the cavity may be in the form of a recess. The cavity 55 may include a bottom surface 55A having a height difference from a lower surface 21A of the carrier 50 in the optical-axis direction and a side surface 55B (or a sidewall) located between the bottom surface 55A and the lower surface 21A of the carrier 50. For example, the bottom surface 55A may be located higher than the lower surface 21A of the carrier 50. For example, the opening 601 may be formed in the bottom surface 55A of the cavity 55.

The magnetic member 130 may correspond to, face, or overlap the bottom surface 55A of the carrier 50 in the optical-axis direction. The carrier 50 may include a coupling portion 90 that is coupled to the lens unit 30 to be self-aligned with the lens unit 30.

For example, the carrier 50 may include a first coupling portion 92 to be self-aligned with and coupled or connected to the lens 32 located on the carrier 50. The first coupling portion 92 may be disposed on an upper portion, an upper end, or an upper surface of the carrier 50. The first coupling portion 92 may protrude from the upper surface of the carrier 50 in the optical-axis direction. For example, the first coupling portion 92 may be a "protrusion" disposed on the upper surface of the carrier 50.

The first coupling portion 92 may include a plurality of protrusions spaced apart from each other. For example, the first coupling portion 92 may include a plurality of protrusions disposed or arranged in the circumferential direction of the carrier 50. In another embodiment, the first coupling portion 92 may include a ring-shaped protrusion. In another embodiment, the first coupling portion 92 may be a single ring-shaped protrusion.

The carrier 50 may include a second coupling portion 94 to be self-aligned with and coupled or connected to the lens 33 located under the carrier 50. The second coupling portion 94 may be disposed on a lower portion, a lower end, or a lower surface of the carrier 50. The second coupling portion 94 may protrude from the lower surface of the carrier 50 in the optical-axis direction. For example, the second coupling portion 94 may be a "protrusion" disposed on the lower surface of the carrier 50.

The second coupling portion 94 may include a plurality of protrusions spaced apart from each other. For example, the second coupling portion 94 may include a plurality of protrusions disposed or arranged in the circumferential direction of the carrier 50. In another embodiment, the second coupling portion 94 may include a ring-shaped protrusion. In another embodiment, the second coupling portion 94 may be a single ring-shaped protrusion.

The iris module 40 may include a rolling member 235 disposed between the moving unit (e.g., the magnetic member 130) and the carrier 50 to facilitate rotation or movement of the moving unit (e.g., the magnetic member 130).

For example, at least a portion of the rolling member 235 may be in contact with the carrier 50. In addition, for example, at least another portion of the rolling member 235 may be in contact with the moving unit (e.g., the magnetic member 130).

The rolling member 235 may perform a rolling motion or a sliding motion between the carrier 50 and the moving unit of the iris module 40 (e.g., the magnetic member 130), thereby reducing friction between the moving unit (e.g., the magnetic member 130) and the fixed unit (e.g., the housing 140), facilitating movement of the moving unit (e.g., the magnetic member 130), and reducing a driving current or power consumption required to move the moving unit (the magnetic member 130).

In addition, the iris module 40 may include a rolling member 236 disposed between the moving unit (e.g., the magnetic member 130) and the housing 140.

For example, at least a portion of the rolling member 236 may be in contact with the housing 140. In addition, for example, at least another portion of the rolling member 236 may be in contact with the moving unit (e.g., the magnetic member 130).

The rolling member 236 may perform a rolling motion or a sliding motion between the housing 140 and the moving unit (e.g., the magnetic member 130), thereby reducing friction between the moving unit (e.g., the magnetic member 130) and the fixed unit (e.g., the housing 140), facilitating movement of the moving unit (e.g., the magnetic member 130), and reducing a driving current or power consumption required to move the moving unit (the magnetic member 130).

The rolling members 235 and 236 may alternatively be referred to as balls, ball members, or ball bearings. For example, the rolling members 235 and 236 may be formed of a metal, plastic, or resin. However, the disclosure is not limited thereto. The rolling members 235 and 236 may have a circular shape and may have a diameter sufficient to support movement of the moving unit (the magnetic member 130). For example, the rolling members 235 and 236 may include a plurality of balls. As shown in FIG. 2B, the number of balls in each of the rolling members 235 and 236 is four. However, in another embodiment, the number of balls may be two, three, or five or greater.

The carrier 50 may include at least one "groove 36A (see FIG. 3)" or a "guide groove" formed therein to facilitate placement or seating of the rolling member 235 and to guide movement of the rolling member 235. For example, the number of grooves 36A may be the same as the number of rolling members. For example, the groove 36A may be disposed on the bottom surface 55A of the carrier 50. At least a portion of the rolling member 235 may be disposed in the groove 36A in the carrier 50.

The housing 140 may include at least one "groove 36B" or a "guide groove" formed therein to facilitate placement or seating of the rolling member 236 and to guide movement of the rolling member 236. The groove 36B (see FIG. 3) in the housing 140 may be formed in a surface of the housing 140 that faces the moving unit (the magnetic member 130).

An iris module 40 according to another embodiment may include only one of the rolling members 235 and 236.

Referring to FIG. 6, the iris module 40 may be located under the lens 32. The iris module 40 may be disposed on the lens 33. Each of the lenses 31 to 36 of the lens unit 30 may include an optical portion and a flange portion. The optical portion may be a portion in which optical performance of the lens is achieved. For example, the optical portion may serve to transmit and refract light reflected from a subject. The optical portion may have a positive or negative refractive index and may have a spherical or aspherical shape. In addition, the optical portion may have a concave shape, a convex shape, or a meniscus shape in a paraxial region (e.g., a region adjacent to the optical axis). For example, the optical portion may include an incidence surface through which light is incident and an exit surface through which the incident light exits.

The flange portion may be a portion of the lens that is fixed to or in contact with another component such as the lens barrel or another lens. For example, the flange portion may extend along the periphery of at least part of the optical portion. The flange portion may be integrally formed with the optical portion. Each of the lenses 31 to 36 may be formed of plastic or resin.

Each of the lenses 31 to 36 may include a protrusion (or an alignment protrusion) disposed on the flange portion. For example, each lens may include at least one of a first protrusion disposed on an upper surface of the flange portion or a second protrusion disposed on a lower surface of the flange portion. For example, the first protrusion may alternatively be referred to as a first alignment protrusion or an upper protrusion, and the second protrusion may alternatively be referred to as a second alignment protrusion or a lower protrusion.

The lens 32 may include a protrusion 58A corresponding to the first coupling portion 92 of the iris module 40. In addition, the lens 33 may include a protrusion 57A corresponding to the second coupling portion 94 of the iris module 40.

The lens 32 located on the iris module 40 may include an optical portion 32A and a flange portion 32B. The optical portion 31A may include an incidence surface 8A and an exit surface 8B.

The lens 32 may include a protrusion 58A to be coupled to the iris module 40. For example, the protrusion 58A of the lens 32 may be coupled to the first coupling portion 92 of the iris module 40.

In addition, the lens 32 may include a protrusion 58B to be coupled to the lens 31 located thereon. Each of the protrusions 58A and 58B may be an alignment protrusion or a self-alignment protrusion.

The lens 32 may include the protrusion 58A disposed on a lower side, a lower portion, or a lower surface of the flange portion 32B. The lens 32 may include the protrusion 58B disposed on an upper side, an upper portion, or an upper surface of the flange portion 32B.

The lens 33 located under the iris module 40 may include an optical portion 33A and a flange portion 33B. The optical portion 33A may include an incidence surface 7A and an exit surface 7B.

The lens 33 may include a protrusion 57A to be coupled to the iris module 40. For example, the protrusion 57A may be coupled to the second coupling portion 94 of the iris module 40.

In addition, the lens 33 may include a protrusion 57B to be coupled to the lens 34 located thereunder. Each of the protrusions 55A and 57B may be an alignment protrusion or a self-alignment protrusion.

The lens 33 may include the protrusion 57A disposed on an upper side, an upper portion, or an upper surface of the flange portion 33B. The lens 33 may include the protrusion 57B disposed on a lower side, a lower portion, or a lower surface of the flange portion 33B.

For example, a length D1 of the iris module 40 in a direction perpendicular to the optical axis may be less than a length L1 of the incidence surface 8A of the lens 32 in a direction perpendicular to the optical axis. For example, the length D1 of the iris module 40 in a direction perpendicular to the optical axis may be less than or equal to a length L2 of the exit surface 8B of the lens 32 in a direction perpendicular to the optical axis.

For example, the length D1 of the iris module 40 in a direction perpendicular to the optical axis may be less than a length L3 of the incidence surface 7A of the lens 33 in a direction perpendicular to the optical axis. In another embodiment, D1 may be equal to L3.

For example, the length D1 of the iris module 40 in a direction perpendicular to the optical axis may be less than a length L4 of the exit surface 7B of the lens 33 in a direction perpendicular to the optical axis. In another embodiment, D1 may be equal to L4.

The iris module 40 may include a first coupling portion 92 corresponding to the protrusion 58A of the lens 32. In addition, the iris module 40 may include a second coupling portion 94 corresponding to the protrusion 57A of the lens 33.

The first coupling portion 92 of the iris module 40 may be in contact with a lower side, a lower portion, or a lower surface of the flange portion 32B of the lens 32. For example, the first coupling portion 92 of the iris module 40 may be in contact with the protrusion 58A of the flange portion 32B of the lens 32. For example, an outer side surface of the first coupling portion 92 may be in contact with an inner side surface of the protrusion 58A of the lens 32. In addition, for example, the protrusion 58A of the lens 32 may be in contact with the iris module 40. For example, the protrusion 58A of the lens 32 may be in contact with the carrier 40 of the iris module 40. For example, the protrusion 58A of the lens 32 may be in contact with an upper surface 21B of the carrier 40 of the iris module 40. In another embodiment, for example, the protrusion 58A of the lens 32 may be spaced apart from the upper surface 21B of the carrier 40 of the iris module 40.

For example, the iris module 40 (e.g., the carrier 40) may include a first coupling region CR1 that is coupled to the protrusion 58A of the lens 32. For example, the remaining portion of the iris module 40 (e.g., the carrier 30) excluding the first coupling region CR1 may be spaced apart from the lens 32. In another embodiment, the remaining portion of the iris module 40 (e.g., the carrier 30) excluding the first coupling region CR1 may be in contact with the lens 32.

For example, the iris module 40 (e.g., the carrier 40) may include a second coupling region CR2 that is coupled to the protrusion 57A of the lens 33. For example, the remaining portion of the iris module 40 (e.g., the carrier 30) excluding the second coupling region CR2 may be spaced apart from the lens 33. In another embodiment, the remaining portion of the iris module 40 (e.g., the carrier 30) excluding the second coupling region CR2 may be in contact with the lens 33.

For example, the first coupling portion 92 of the iris module 40 may face or overlap the protrusion 58A of the lens 32 in a direction perpendicular to the optical axis. For example, the first coupling portion 92 may be located farther inward than the protrusion 58A of the lens 32.

For example, the first coupling portion 92 may include a side surface 29A (e.g., an outer side surface) that faces or opposes one side surface of the protrusion 58A of the lens 32 (e.g., an inner side surface of the protrusion 58A). For example, the side surface of the protrusion 58A of the lens 32 (e.g., the inner side surface of the protrusion 58A) and the side surface 29A (e.g., the outer side surface) of the first coupling portion 92 may be coupled to or in contact with each other.

For example, the side surface 29A may be an inclined surface. For example, the side surface 29A may be an inclined surface tilted with respect to a horizontal plane perpendicular to the optical axis. In addition, for example, one side surface (e.g., the inner side surface) of the protrusion 58A of the lens 32 that faces or opposes the side surface 29A may be an inclined surface. Accordingly, the first coupling portion 92 and the protrusion 58A of the lens 32 may be easily and firmly assembled or coupled. In addition, for example, at least one of the outer side surface (the side surface 29A) or the inner side surface of the first coupling portion 92 may include an inclined surface.

For example, the first coupling portion 92 may include a portion that decreases in width from a lower side of the iris module 40 toward an upper side of the iris module 40 (or from a lower surface of the carrier 40 toward an upper surface of the carrier 30). For example, the width of the first coupling portion 92 may be a length of the first coupling portion 92 in a direction perpendicular to the optical-axis direction. Accordingly, the first coupling portion 92 and the protrusion 58A of the lens 32 may be easily and firmly assembled or coupled.

For example, the second coupling portion 94 may include a side surface 29B (e.g., an inner side surface) that faces or opposes one side surface of the protrusion 57A of the lens 33 (e.g., an outer side surface of the protrusion 57A). For example, the side surface of the protrusion 57A of the lens 33 (e.g., the outer side surface of the protrusion 58A) and the side surface 29B (e.g., the outer side surface) of the second coupling portion 94 may be coupled to or in contact with each other.

For example, the side surface 29B may be an inclined surface. For example, the side surface 29B may be an inclined surface tilted with respect to a horizontal plane perpendicular to the optical axis. In addition, for example, one side surface (e.g., the inner side surface) of the protrusion 57A of the lens 33 that faces or opposes the side surface 29B may be an inclined surface. Accordingly, the second coupling portion 94 and the protrusion 55A of the lens 33 may be easily and firmly assembled or coupled. In addition, for example, at least one of the outer side surface or the inner side surface 29B of the second coupling portion 94 may include an inclined surface.

For example, the second coupling portion 94 may include a portion that decreases in width from the upper side of the iris module 40 toward the lower side of the iris module 40 (or from the upper surface of the carrier 40 toward the lower surface of the carrier 30). For example, the width of the second coupling portion 94 may be a length of the second coupling portion 94 in a direction perpendicular to the optical-axis direction. Accordingly, the second coupling portion 94 and the protrusion 57A of the lens 33 may be easily and firmly assembled or coupled.

For example, the optical axis OA may be located closer to the first coupling portion 92 of the iris module 40 than to the protrusion 58A of the lens 32. For example, a distance between the first coupling portion 92 of the iris module 40 and the optical axis OA may be less than a distance between the protrusion 58A of the lens 32 and the optical axis. In addition, for example, the optical axis OA may be located closer to the protrusion 58B of the lens 32 than to the first coupling portion 92 of the iris module 40. For example, a distance between the first coupling portion 92 of the iris module 40 and the optical axis OA may be greater than a distance between the protrusion 58B of the lens 32 and the optical axis OA.

The second coupling portion 94 of the iris module 40 may be in contact with an upper side, an upper portion, or an upper surface of the flange portion 33B of the lens 33. For example, the second coupling portion 94 of the iris module 40 may be in contact with the protrusion 57A of the flange portion 33B of the lens 33. For example, an inner side surface of the second coupling portion 94 of the iris module 40 may be in contact with an outer side surface of the protrusion 57A of the flange portion 33B of the lens 33.

In addition, for example, the protrusion 57A of the lens 33 may be in contact with the iris module 40. For example, the protrusion 57A of the lens 33 may be in contact with the carrier 40 of the iris module 40. For example, the protrusion 57A of the lens 33 may be in contact with a lower surface 21A of the carrier 40 of the iris module 40. In another embodiment, the protrusion 57A of the lens 33 may be spaced apart from the lower surface 21A of the carrier 40 of the iris module 40.

For example, the second coupling portion 95 of the iris module 40 may face or overlap the protrusion 57A of the lens 33 in a direction perpendicular to the optical axis. For example, the second coupling portion 94 may be located farther outward than the protrusion 57A of the lens 33.

For example, the optical axis OA may be located closer to the protrusion 57A of the lens 33 than to the second coupling portion 94 of the iris module 40. For example, a distance between the second coupling portion 94 of the iris module 40 and the optical axis OA may be greater than a distance between the protrusion 57A of the lens 33 and the optical axis.

For example, the optical axis OA may be located closer to the second coupling portion 94 of the iris module 40 than to the protrusion 57B of the lens 33. For example, a distance between the second coupling portion 94 of the iris module 40 and the optical axis OA may be less than a distance between the protrusion 57B of the lens 33 and the optical axis. The arrangement relationships between the protrusions 58A, 58B, 57A, and 57B of the lenses 32 and 33 and the coupling portions 92 and 94 of the iris module 40 described with reference to FIG. 6 may serve to enable stable, accurate, and easy self-alignment between the iris module 40 and the lenses 31 to 36 of the lens unit 30.

Referring to FIG. 7, the lens moving device 100 may include an AF moving unit and a fixed unit. The AF moving unit may move in the optical-axis direction relative to the fixed unit. For example, the AF moving unit may include a bobbin 1110. The AF moving unit may further include a component (e.g., a magnetic member 1130) that is coupled to the bobbin 1110. For example, the magnetic member 1130 may be a magnet. In another embodiment, the AF moving unit may further include a lens module 10 that is coupled to the bobbin 110.

The fixed unit of the lens moving device 100 may be a fixed element. That is, the fixed unit may not move in the optical-axis direction. Alternatively, the fixed unit may not move or tilt in a direction perpendicular to the optical axis. In addition, the fixed unit may not rotate about the optical axis. In addition, a component coupled to the fixed unit may also be included in the fixed unit. The moving unit may be an element that is movable relative to the fixed unit.

The bobbin 1110 may move in the optical-axis direction. The lens moving device 100 may include a coil 1120 and a magnetic member 1130 that move the bobbin 1110 in the optical-axis direction through electromagnetic interaction therebetween. The coil 1120 and the magnetic member 1130 may constitute an AF driving unit that moves or drives the AF moving unit. The bobbin 1110 may include an opening to be coupled to the lens barrel 10.

The lens moving device 100 may include a housing 1140 that accommodates the bobbin 1110. The bobbin 1110 may be disposed in the housing 1140. The coil 1120 may be disposed on the bobbin 1110, and the magnetic member 1130 may be disposed on the housing 1140. In another embodiment, the coil 1120 may be disposed on the housing 1140, and the magnetic member 1130 may be disposed on the bobbin 1110. For example, in an initial position of the bobbin 1110, the magnetic member 1130 may at least partially overlap the coil 1120 in a direction perpendicular to the optical axis OA. For example, the initial position of the bobbin 1110 may be a first position of the AF moving unit (e.g., the bobbin) when no power, driving signal, or sensing signal is applied to the coil 1120. In addition, the initial position of the bobbin 1110 may be a position at which the AF moving unit is placed when gravity acts from the bobbin 1110 toward a base 1210, or conversely, when gravity acts from the base 1210 toward the bobbin 1110. The AF moving unit may include the bobbin 1110 and components mounted on the bobbin 1110, for example, the coil 1120.

The lens moving device 100 may include an elastic member that is coupled to the bobbin 1110 and to the housing 1140. The elastic member may include at least one of an upper elastic member 1150 or a lower elastic member 1160. The elastic member may support the bobbin 1110. For example, the upper elastic member 1150 may be coupled to an upper portion, an upper surface, or an upper end of the bobbin 1110 and to an upper portion, an upper surface, or an upper end of the housing 1140, and the lower elastic member 1160 may be coupled to a lower portion, a lower surface, or a lower end of the bobbin 1110 and to a lower portion, a lower surface, or a lower end of the housing 1140.

The lens moving device 100 may include a base 1120 disposed under the bobbin 1110 and/or the housing 1140. For example, the base 1210 may be disposed under the lower elastic member 1160. The base 1210 may include an opening corresponding to an opening in the bobbin 1110 and/or an opening in the housing 1140.

The lens moving device 100 may include a cover member 300 that accommodates the housing 1140, the bobbin 1110, and the lens barrel 10. The cover member 300 may be coupled to the base 1210. The cover member 300 may include an upper plate and a side plate, and the side plate may be coupled to the base 1210. The cover member 300 and the base 1210 may be included in the fixed unit of the lens moving device 100.

In addition, although not shown in FIG. 7, the lens moving device 100 may include a position sensor (hereinafter referred to as an AF position sensor) configured to detect displacement or a position of the bobbin 1110 in the optical-axis direction. The AF position sensor may be disposed on the housing, and the lens moving device 100 may further include a sensing magnet that corresponds to or faces the AF position sensor. The AF position sensor may detect a magnetic field of the sensing magnet. In another embodiment, the sensing magnet may be disposed on the housing, and the AF position sensor may be disposed on the bobbin.

The cover member 300, the housing 1140, the bobbin 1110, the coil 1120, the magnetic member 1130, the upper elastic member 1150, the lower elastic member 1160, and the base 1210 shown in FIG. 7 may be included in the autofocusing unit 101.

The sensor unit 500 may include an image sensor 810 disposed under the lens moving device 100. The image sensor 810 may correspond to, face, or overlap the lens module 10 in the optical-axis direction.

The image sensor 810 may perform a function of converting light that has passed through the lens module 10 into image data. In more detail, the image sensor 810 may convert light into an analog signal through a pixel array including a plurality of pixels, and may synthesize digital signals corresponding to the analog signal to generate image data.

The sensor unit 500 may further include a filter 610 disposed between the lens module 10 and the image sensor 810. The filter 610 may block a specific frequency band of the light passing through the lens module 10 from entering the image sensor 810. For example, the filter 610 may be an infrared cut-off filter. However, the disclosure is not limited thereto. In this case, the filter 610 may be disposed to be parallel to a plane perpendicular to the optical axis, for example, an x-y plane.

The sensor unit 500 may further include a circuit board 800 electrically connected to the image sensor 810. The circuit board 800 may be disposed under the image sensor 810. The circuit board 800 may be disposed under the lens moving device 100. The circuit board 800 may be a printed circuit board.

The sensor unit 500 may further include a sensor base 1310 on which the filter 610 is mounted or disposed. The sensor base 1310 may be disposed on the circuit board 800. The sensor base 1310 may be disposed between the lens moving device 100 and the circuit board 800. The filter 610 may be disposed on the sensor base 1310.

In another embodiment, the sensor base 1310 may be omitted, and the filter 610 may be disposed on the base 1210 of the lens moving device 100. For example, the filter 610 may be disposed on or attached to a lower surface of the base 210.

Although not shown in FIG. 7, the lens moving device 100 may include an OIS unit 102. For example, the OIS unit 102 may be located above the image sensor 810. For example, the OIS unit 102 may move the bobbin 1110 in a direction perpendicular to the optical axis. In addition, the OIS unit 102 may move an OIS moving unit (e.g., the housing 1140) in a direction perpendicular to the optical axis. The OIS moving unit may include the housing 1140 and a component coupled to the housing 1140. For example, the OIS moving unit may include the AF moving unit.

The OIS unit 102 may include a coil (hereinafter referred to as an "OIS coil") that moves the housing 1140 in a direction perpendicular to the optical axis through interaction with the magnetic member 1130. The OIS coil may correspond to, face, or overlap the magnetic member 1130 in the optical-axis direction.

The OIS unit 102 may include a circuit board electrically connected to the OIS coil. For example, the circuit board may be disposed on the base 1210. For example, the OIS coil may be disposed on the circuit board. Alternatively, the OIS coil may be integrally formed with the circuit board.

In addition, the OIS unit 102 may include a support member coupled to the upper elastic member 1150 and electrically connected to the circuit board of the OIS unit. For example, the support member may be in the form of a wire. In addition, the OIS unit 102 may include a position sensor (hereinafter referred to as an OIS position sensor) configured to detect displacement or a position of the housing 1140 in a direction perpendicular to the optical axis. For example, the OIS position sensor may detect a magnetic field of the magnetic member 1130. For example, the OIS position sensor may be disposed on the base and may be electrically connected to the circuit board of the OIS unit 102.

In still another embodiment, the OIS unit 102 may move the sensor unit 500 in a direction perpendicular to the optical axis, rather than moving the housing 1140. For example, in another embodiment, the OIS unit 102 may move the image sensor 810 and the circuit board 800 in a direction perpendicular to the optical axis.

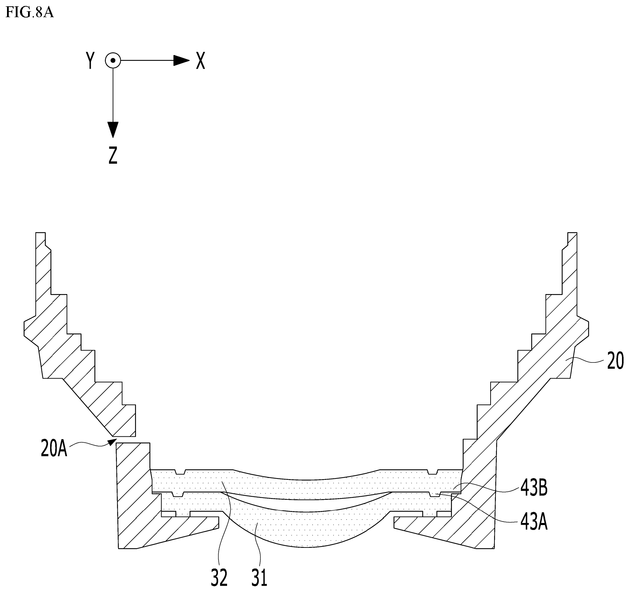

FIGs. 8A to 8E show a method of manufacturing the lens module 10 of the camera device 200 according to an embodiment.

Referring to FIG. 8A, the lenses 31 and 32 are sequentially assembled in the lens barrel 20. The lenses 31 and 32 may be self-aligned by the alignment protrusion 43A of the lens 31 and the alignment protrusion 43B of the lens 32.

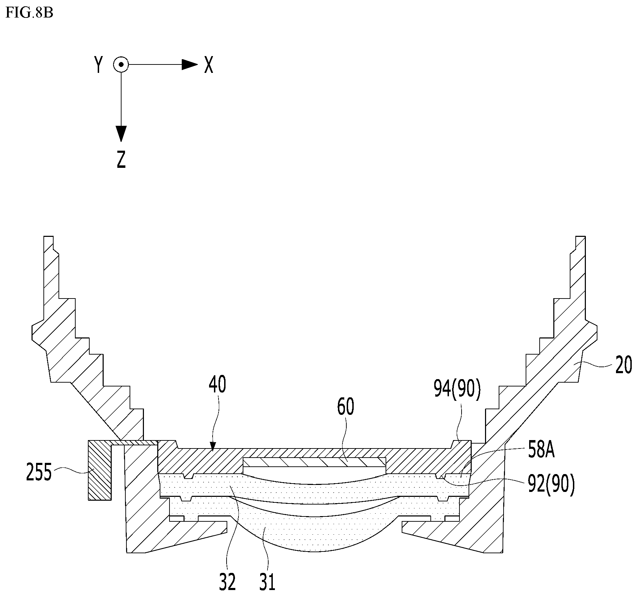

Referring to FIG. 8B, the iris module 40 is placed on the lens 32. In this case, the protrusion 58A of the lens 32 and the first coupling portion 92 of the iris module 40 may be in contact with each other, and the lens 32 and the iris module 40 may be self-aligned while being guided by the protrusion 58A and the first coupling portion 92.

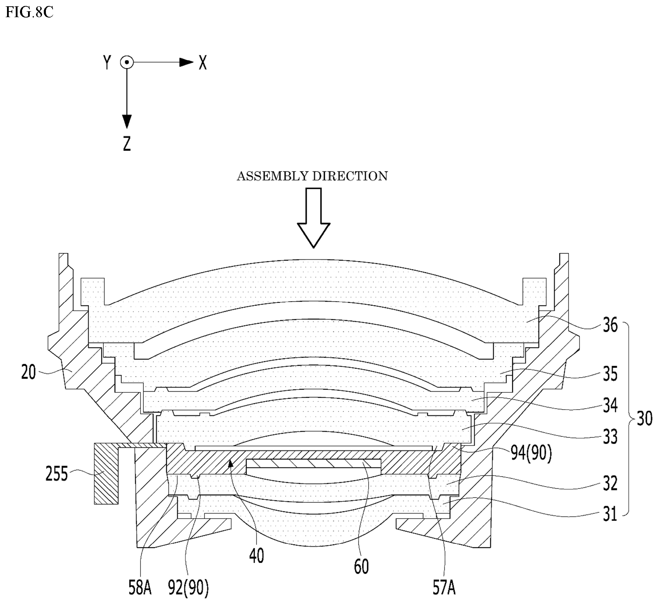

Referring to FIG. 8C, the lens 33 is placed on the iris module 40. In this case, the second coupling portion 94 of the iris module 40 and the protrusion 57A of the lens 33 may be in contact with each other, and the iris module 40 and the lens 33 may be self-aligned while being guided by the protrusion 57A and the second coupling portion 94.

As shown in FIGs. 8B and 8C, since the second lens 32 and the iris module 40 are self-aligned and the lens 33 and the iris module 40 are self-aligned, the lens 32 and the lens 33 may be self-aligned by the iris module 40.

In addition, at least part of the connecting portion 255 of the circuit board 250 of the iris module 40 may be disposed outside the lens barrel 20 through an opening 20A formed in the lens barrel 20. For example, the opening 20A may be a through-hole penetrating the lens barrel 20.

The remaining lenses 34 to 36 of the lens unit 30 are sequentially placed on the lens 33. The lenses 34 to 35 may also be self-aligned and assembled by the alignment protrusions.

Referring to FIG. 8D, the connecting portion 255 of the circuit board 250 is fixed to a first jig JIG1. A connecting portion of an active alignment device is electrically connected to the connecting portion 255 of the circuit board 250 using a second jig JIG2.

Subsequently, the iris module 40 is controlled by the active alignment device so that the aperture 301 of the blade member 150 of the iris module 40 has a maximum diameter. That is, the aperture 301 of the blade member 150 is fully opened. Subsequently, the lens module 10 is coupled to the bobbin 1110 of the lens moving device 100, and at the same time, an automatic alignment process is performed.

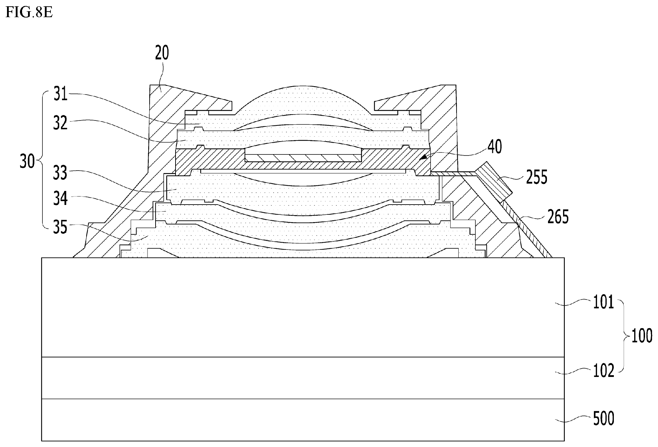

Referring to FIG. 8E, the iris module 40 and the sensor unit 500 are electrically connected using a conductive member 236.

Unlike a comparative example in which an iris is located outside a lens barrel, the embodiment is structured such that the iris module 40 is located inside the lens barrel 20 and is located between the lenses. Compared with the comparative example, the embodiment provides the following advantages.

Since the iris module 40 is located between the lenses, a total top length (or a total track length (TTL)) of the lens module 10 may be reduced. The TTL may be a distance between a highest point of an incidence surface of the first lens (e.g., 31) and the image sensor 810.

Since the iris module 40 is located inside the lens barrel 20 and is located between the lenses, a required size of the aperture 301 of the blade member 150 of the iris module 40 may be designed to be small. When the required size of the aperture 301 of the blade member 150 is designed to be small, the size of the blade member 150 (or the iris) may be reduced, which may increase a speed of the iris, a moving speed of the blade member 150, or a size varying speed of the aperture 301. Such improvement in the speed of the iris may enhance camera performance.

In general, when the thickness of blades of an iris module increases, sagging of the blades may occur, which may hinder driving (or movement) of the blades and may cause spatial interference with other components.

In the embodiment, since the size of the blade 150 may be designed to be small, the thickness of the blade 150 may be reduced, which may prevent sagging of the blade 150.

In addition, in the embodiment, separate components (e.g., spacers) for lens alignment are not required because self-alignment between the lenses 31 to 36 is achieved using the iris module 40. Accordingly, in the embodiment, the structure of the lens module 10 may be simplified, the weight of the lens module 10 may be reduced, a driving current for AF driving may be reduced, and power consumption may be reduced.

In addition, as shown in FIGs. 8A to 8E, since the iris module 40 and the lenses 31 to 36 are sequentially assembled while self-alignment is performed, an automatic lens assembly process may be achieved, and an active alignment process may be performed.

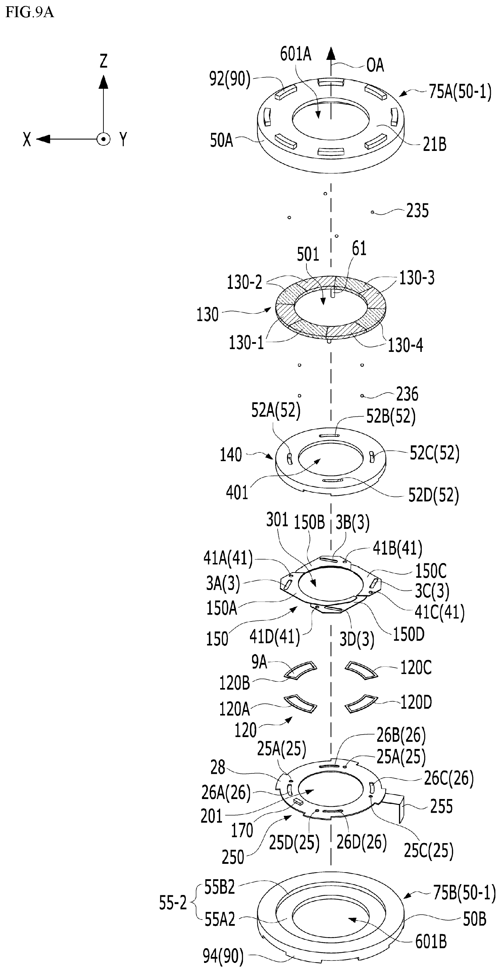

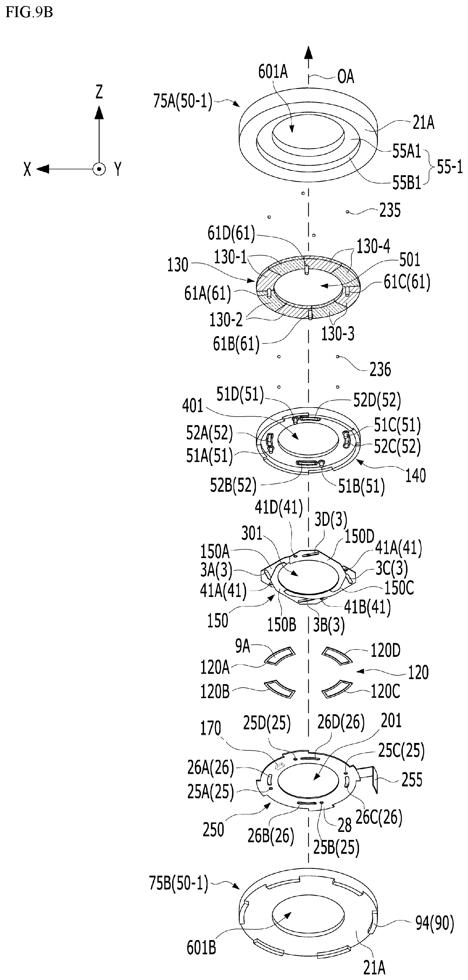

FIG. 9A is an exploded perspective view of an iris module 40 according to another embodiment of the camera device 200, and FIG. 9B is an exploded perspective view of the iris module 40 shown in FIG. 9A viewed from another direction. In FIGs. 9A and 9B, the same reference numerals as in FIGs. 2A and 2B denote the same components, and descriptions of the same components will be omitted or given in brief.

A carrier 50-1 of the iris module 40 shown in FIGs. 9A and 9B may include a first carrier 75A and a second carrier 75B. The second carrier 75B may be located under the first carrier 75A. For example, the first carrier 75A and the second carrier 75B may be coupled to each other.

The first carrier 75A may be located on the magnetic member 130, and the second carrier 75B may be disposed under the circuit board 250. At least one of the first carrier 75A or the second carrier 75B may accommodate the iris unit 60.

The first carrier 75A may include a first opening 601A. The description of the opening 601 in the carrier 50 may be applied directly or analogously to the first opening 601A.

The first carrier 75A may include a first body 50A. The first carrier 75A may include a first cavity 55-1 to receive at least a portion of the iris unit 60. The cavity 55-1 may be defined in the first body 50A. For example, the first cavity 55-1 may be in the form of a recess. The first cavity 55-1 may include a first bottom surface 55A1 having a height difference from a lower surface of the first carrier 75A in the optical-axis direction and a first side surface 55B1 (or a sidewall) located between the first bottom surface 55A1 and the lower surface of the first carrier 75A. For example, the first bottom surface 55A1 may be located higher than the lower surface of the first carrier 75A. For example, the first opening 601A may be formed in the first bottom surface 55A1 of the first cavity 55-1.

The first carrier 75A may include a first coupling portion 92. The first coupling portion 92 may be disposed on the first body 50A. For example, the first coupling portion 92 may be disposed on an upper portion, an upper end, or an upper surface of the first body 50A. The description of the first coupling portion 92 of the carrier 50 may be applied directly or analogously to the first coupling portion 92 of the first carrier 75A.

The second carrier 75B may include a second opening 601B. The description of the opening 601 in the carrier 50 may be applied directly or analogously to the second opening 601B.

The second carrier 75B may include a second body 50B. The second body 50B may be coupled to the first body 50A. For example, a lower portion, a lower end, or a lower surface of the first body 50A may be coupled to an upper portion, an upper end, or an upper surface of the second body 50B.

The second carrier 75B may include a second cavity 55-2 to receive at least another portion of the iris unit 60. The second cavity 55-2 may be defined in the second body 50B. For example, the second cavity 55-2 and 55-2 may be in the form of a recess. The second cavity 55-2 may include a second bottom surface 55A2 having a height difference from an upper surface of the second carrier 75B in the optical-axis direction and a second side surface 55B2 (or a sidewall) located between the second bottom surface 55A2 and the upper surface of the second carrier 75B. For example, the second bottom surface 55A2 may be located lower than the upper surface of the second carrier 75B. For example, the second opening 601B may be formed in the second bottom surface 55A2 of the second cavity 55-2.

The second carrier 75B may include a second coupling portion 94. The second coupling portion 94 may be disposed on the second body 50B. For example, the second coupling portion 94 may be disposed on a lower portion, a lower end, or a lower surface of the second body 50B. The description of the second coupling portion 94 of the carrier 50 may be applied directly or analogously to the second coupling portion 94 of the second carrier 75B.

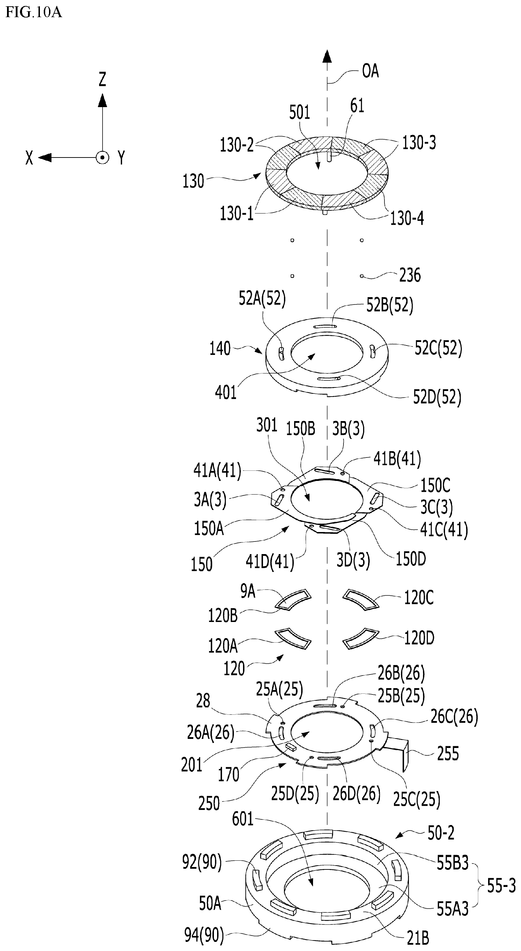

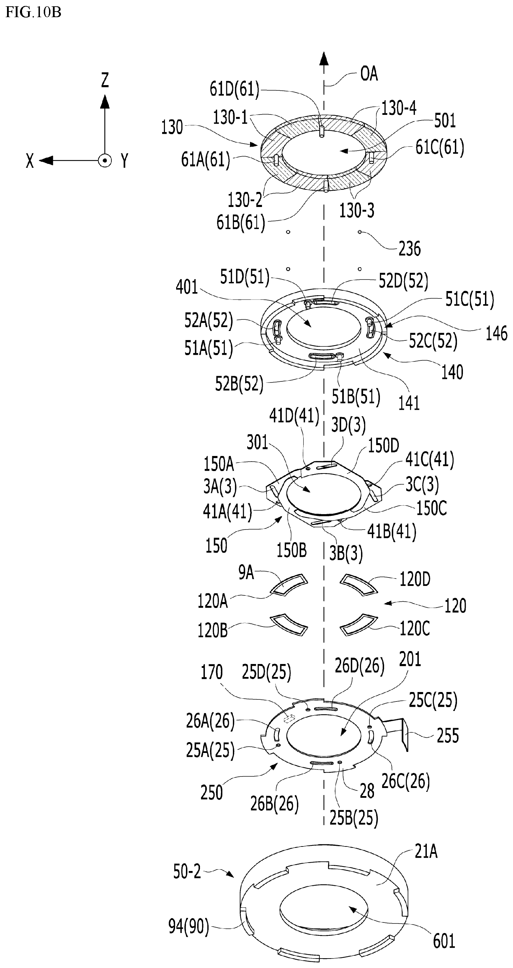

FIG. 10A is a perspective view of an iris module 40 according to still another embodiment, and FIG. 10B is a perspective view of the iris module 40 shown in FIG. 10A viewed from another direction.

The placement position of a carrier 50-2 of the iris module 40 shown in FIGs. 10A and 10B differs from the placement position of the carrier 50 of the embodiment shown in FIG. 2A. The carrier 50-2 may be located under the circuit board 250. For example, a cavity 55-3 in the carrier 50-2 may include a bottom surface 55A3 located under an upper surface of the carrier 50-2 and a side surface 55B3 (or a sidewall) located between the bottom surface 55B of the carrier 50-1 and the upper surface of the carrier 50-2. The circuit board 250 and/or the housing 140 may be disposed on the bottom surface 55B of the carrier 50-1. In the embodiment shown in FIGs. 10A and 10B, the rolling member 235 shown in FIG. 2A may be omitted.

In FIG. 2A, the carrier 50 may be coupled to the iris unit 60 from an upper side of the magnetic member 130 toward a lower side of the magnetic member 130. In the embodiment shown in FIG. 10A, the carrier 50-2 may be coupled to the iris unit 60 from a lower side of the circuit board 250 toward an upper side of the circuit board 250.

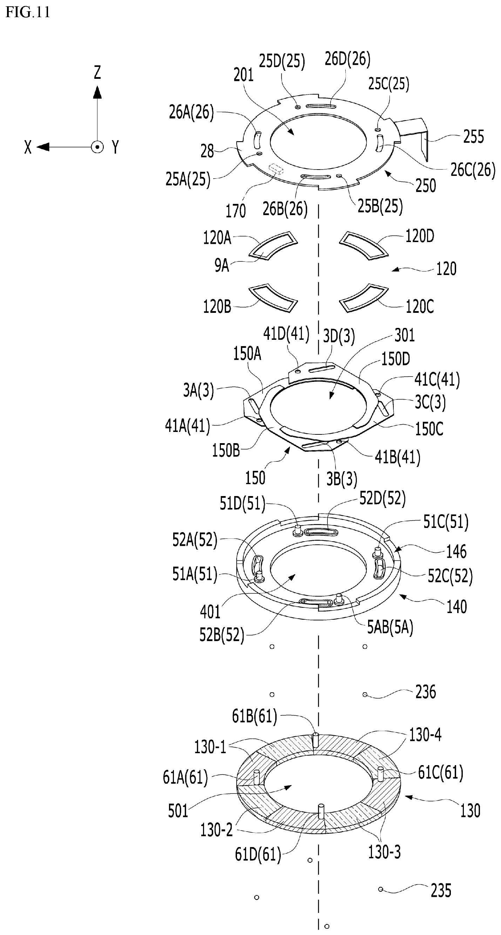

FIG. 11 shows arrangement of the iris unit 60 according to another embodiment.

Referring to FIG. 11, the iris unit 60 may be configured such that the circuit board 250, the coil 120, the blade member 150, the housing 140, the rolling member 236, the magnetic member 130, and the rolling member 235 are sequentially disposed from above to below.

The iris unit 60 shown in FIG. 11 may be applied directly or analogously to the embodiments shown in FIGs. 9A and 10A. In addition, the iris unit 60 shown in FIG. 11 may be applied directly or analogously to the embodiment shown in FIG. 2A. In this case, the rolling member 235 may be omitted.

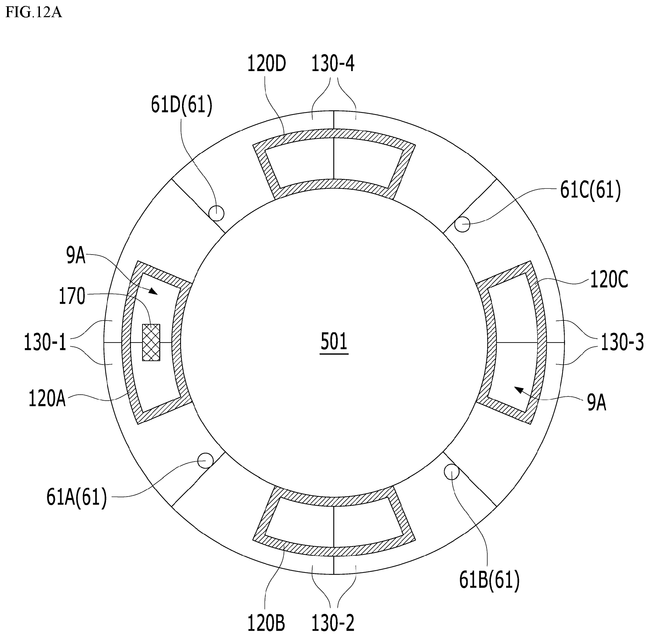

FIG. 12A is a plan view of the magnetic member 130, the coil 120, and the position sensor 170 according to the embodiment.

Referring to FIG. 12A, when viewed from above or below or in the optical-axis direction, the position sensor 170 may overlap one magnet unit (e.g., 130-1) of the magnetic member 130. For example, the position sensor 170 may overlap a boundary line between the N pole and the S pole of the magnet unit (e.g., 130-1).

When viewed from above or below or in the optical-axis direction, the position sensor 170 may be disposed in the hollow portion 9A in the coil unit (e.g., 120A) corresponding to the magnet unit (e.g., 130-1). For example, the position sensor 170 may overlap the hollow portion 9A in the coil unit (e.g., 120A) in the optical-axis direction. In addition, the position sensor 170 may overlap the coil unit (e.g., 120A) in a direction perpendicular to the optical-axis direction.

The position sensor 170 may be located closer to the inner circumferential surface (or the inner side surface) of the magnetic member 130 than to the outer circumferential surface (or the outer side surface) of the magnetic member 130. In another embodiment, the position sensor 170 may be located closer to the outer circumferential surface (or the outer side surface) of the magnetic member 130 than to the inner circumferential surface (or the inner side surface) of the magnetic member 130. In still another embodiment, the position sensor 170 may be located to be spaced the same distance from the inner circumferential surface (or the inner side surface) and the outer circumferential surface (or the outer side surface) of the magnetic member 130.

In order to avoid spatial interference with the position sensor 170, the driving shafts 61 may be located outside the hollow portions 9A in the coil units 120A to 120D.

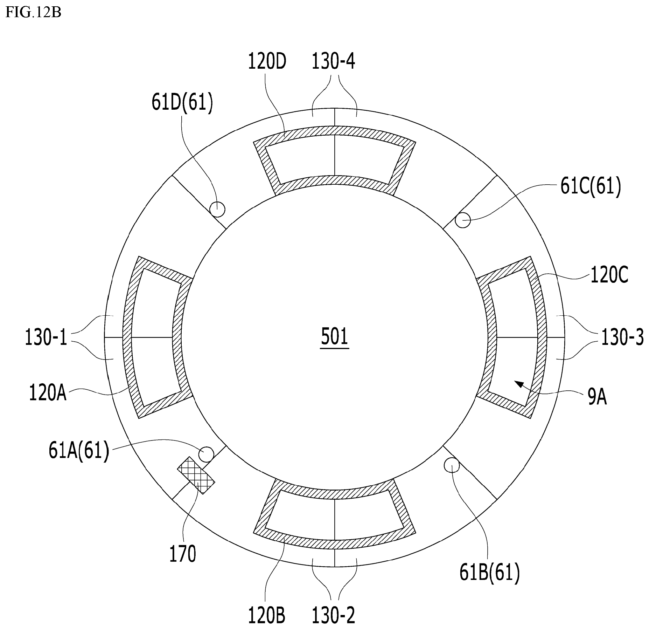

FIG. 12B shows arrangement of the position sensor 170 according to another embodiment.

Referring to FIG. 12B, the position sensor 170 may be located outside the hollow portion 9A in the coil 120. For example, the position sensor 170 may be located outside the hollow portion 9A in the coil unit (e.g., 120A). For example, the position sensor 170 may be located between two adjacent coil units (e.g., 120A and 120B).

The position sensor 170 may be disposed to overlap a boundary line between two adjacent magnet units (e.g., 130-1 and 130-2). For example, the position sensor 170 may be disposed to overlap a boundary line between the N pole and the S pole of two adjacent magnet units (e.g., 130-1 and 130-2).

As shown in FIG. 12B, since the position sensor 170 is disposed to overlap a boundary line between two adjacent magnet units (e.g., 130-1 and 130-2), the position sensor 170 may be located far away from the coil 120 (or the coil units 120A to 120D). Accordingly, it may be possible to prevent deterioration in the reliability and performance of the position sensor 170 due to influence of a magnetic field generated by the coil 120.

For example, the position sensor 170 may be located closer to the driving shaft (e.g., 61A) located between two adjacent coil units (e.g., 120A and 120B) than to the two adjacent coil units 120A and 120B. When a driving signal is supplied to the coil units 120A to 120D, magnetic fields are generated in the coil units 120A to 120D. The magnetic fields of the coil units 120A to 120D may affect an output from the position sensor 170, thereby deteriorating the performance of the position sensor 170 and reducing the position sensing accuracy of the position sensor. In the embodiment, the position sensor 170 may be disposed to be spaced far away from the two adjacent coil units 120A and 120. Accordingly, the position sensor 170 may be less affected by the magnetic fields of the coil units 120A to 120D, and deterioration in the sensing accuracy of the position sensor 170 may be prevented.

For example, when viewed from above or below, the position sensor 170 may be disposed between the driving shaft 61A and the outer circumferential surface (or the outer side surface) of the magnetic member 130. In another embodiment, for example, when viewed from above or below, the position sensor 170 may be disposed between the driving shaft 61A and the inner circumferential surface (or the inner side surface) of the magnetic member 130.

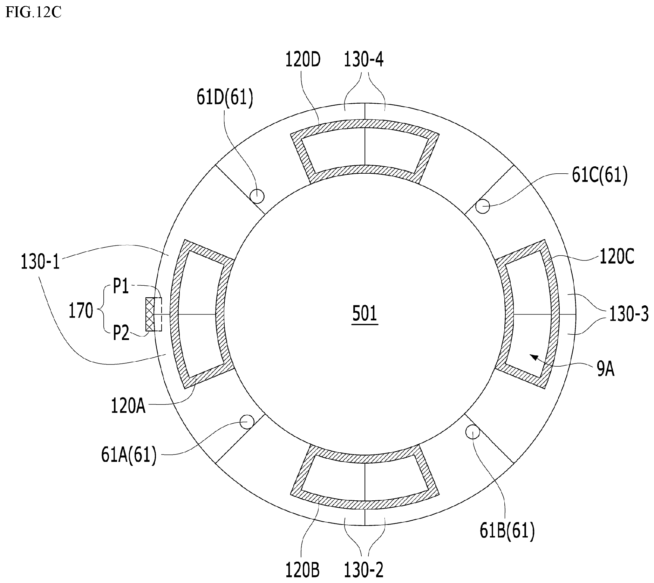

FIG. 12C shows arrangement of the position sensor 170 according to still another embodiment.

Referring to FIG. 12C, the position sensor 170 may not overlap the coil 120 in the optical-axis direction. The position sensor 170 may include a first portion P1 that overlaps the magnetic member 130 in the optical-axis direction and a second portion P2 that does not overlap the magnetic member 130 in the optical-axis direction. For example, when viewed from above or below, the first portion P1 may be located farther inward than the outer circumferential surface (the outer side surface) of the magnetic member 130.

For example, when viewed from above or below, the second portion P2 may be located outside the outer circumferential surface (or the outer side surface) of the magnetic member 130. When viewed from above or below, the position sensor 170 may be disposed to overlap the outer circumferential surface (or the outer side surface) of the magnetic member 130 in the optical-axis direction. Accordingly, the position sensor 170 may be less affected by the magnetic field of the coil 120, and it may be possible to prevent deterioration in the reliability or performance of the position sensor 170 due to influence of the magnetic field of the coil 120.

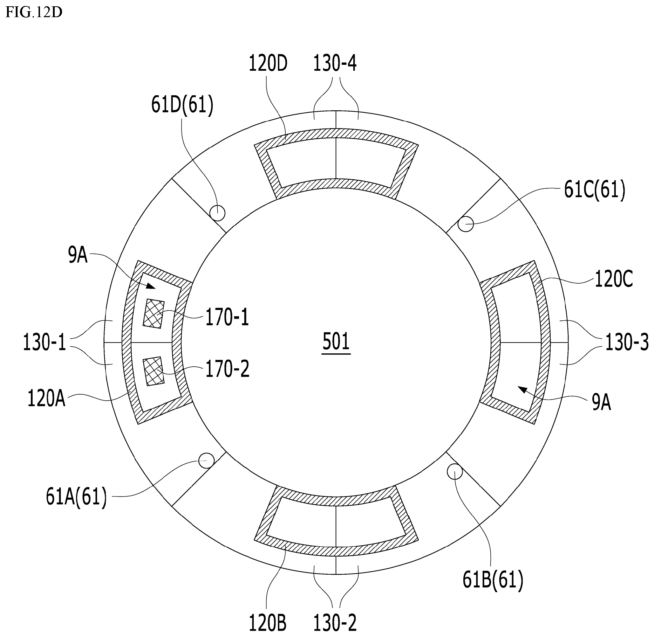

FIG. 12D shows arrangement of position sensors 170-1 and 170-2 according to still another embodiment.

Referring to FIG. 12D, the iris module 40 may include two or more position sensors (e.g., 170-1 and 170-2) corresponding to one magnet unit (e.g., 130-1) of the magnet 130.

For example, the iris module 40 may include at least one first position sensor (e.g., 170-1) that corresponds to or overlaps the N pole of one magnet unit (e.g., 130-1). In addition, the iris module 40 may include at least one second position sensor (e.g., 170-2) that corresponds to or overlaps the S pole of one magnet unit (e.g., 130-1).

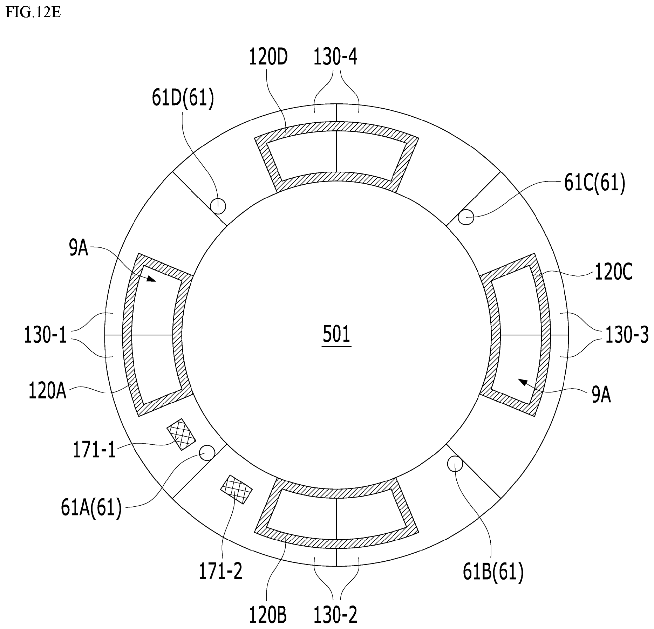

FIG. 12E shows arrangement of position sensors 171-1 and 171-2 according to still another embodiment. Referring to FIG. 12E, the iris module 40 may include at least one first position sensor 171-1 that corresponds to or overlaps the N pole (or the S pole) of one (e.g., 130-1) of two magnet units (e.g., 130-1 and 130-2).

In addition, the iris module 40 may include at least one second position sensor (e.g., 171-2) that corresponds to or overlaps the S pole (or the N pole) of the other one (e.g., 130-2) of the two magnet units (e.g., 130-1 and 130-2). In this case, the two magnet units may be adjacent to each other. In another embodiment, the two magnet units may be spaced apart from each other.

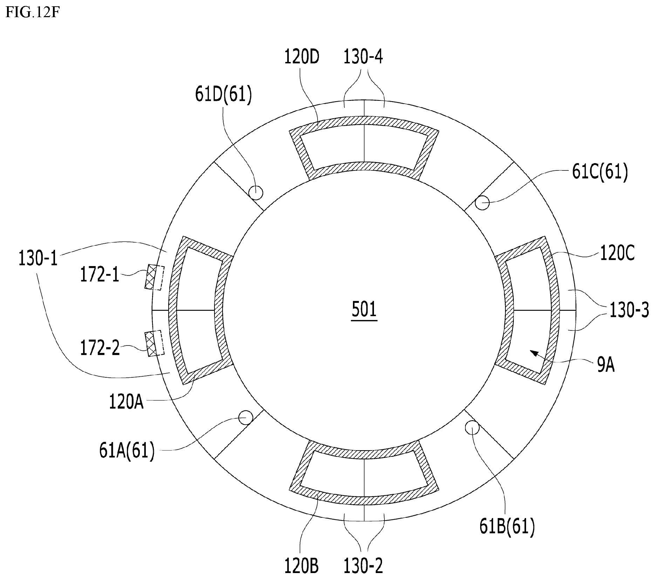

FIG. 12F shows arrangement of position sensors 172-1 and 172-2 according to still another embodiment. Referring to FIG. 12F, the iris module 40 may include two or more position sensors 172-1 and 172-2 corresponding to one magnet unit (e.g., 130-1) of the magnet 130. The iris module 40 may include at least one first position sensor 172-1 that corresponds to or overlaps the N pole of one magnet unit (e.g., 130-1). In addition, the iris module 40 may include at least one second position sensor 172-2 that corresponds to or overlaps the S pole of one magnet unit (e.g., 130-1). The description of the position sensor 170 shown in FIG. 12C may be applied directly or analogously to each of the position sensors 172-1 and 172-2 shown in FIG. 12F.

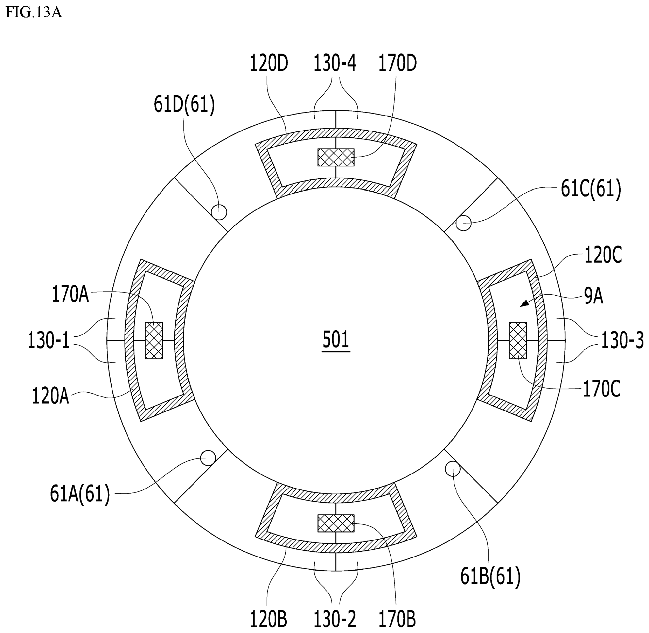

FIG. 13A shows arrangement of the position sensor 170 according to still another embodiment.

Referring to FIG. 13A, the position sensor 170 may include a plurality of sensors 170A to 170D. In FIG. 13A, the position sensor 170 may include sensors that correspond to the magnet units 130-1 to 130-4, respectively. Alternatively, the position sensor 170 may include sensors that correspond to the coil units 120A to 120D, respectively. In FIG. 13A, the number of sensors of the position sensor 170 may be equal to the number of magnet units.

When the diameter of the lens unit 30 (or the lens) increases, the size of the variable aperture 301 of the blade member 150 may increase. To this end, moving distances of the blades 150A to 150D need to be increased. In order to increase the moving distances of the blades 150A to 150D, a moving range (or an amount of rotation) of the magnetic member 130 needs to be increased.

In order to easily and accurately sense the increased moving range of the magnetic member 130 or displacement of the blades 150A to 150D, which have increased moving distances, an output or an output voltage from the position sensor 170 needs to be large.

In the embodiment, outputs from two or more sensors may be summed by a controller, and displacement of the blades 150A to 150D may be easily and accurately sensed using the summed output value. Accordingly, the iris module 40 may precisely vary the size of the aperture 301 of the iris unit 60 to a desired value. The controller may be a controller included in the camera device 200 or a controller 780 of an optical instrument 200A.

In another embodiment, output terminals of each of two or more sensors may be electrically connected in series to each other. For example, two output terminals of each of the two or more sensors may be connected in series to each other. In addition, a signal output from both ends of the series-connected output terminals of the two or more sensors may serve as an output from the position sensor 170. In this case, an output value (or a range of the output value) from the position sensor 170 may be greater than an output value (or a range of the output value) from one sensor. Since the output value (or the output range) from the position sensor 170 becomes larger in this manner, a code value (or a range of code values) of the position sensor 170 corresponding to the output value (or the output range) may increase. Accordingly, the sensitivity of the position sensor 170 may be improved, displacement of the blades 150A to 150D may be accurately controlled, and the size of the aperture 301 of the iris unit 60 may be precisely varied to a desired value. In this case, the code value of the position sensor 170 may be a preset value corresponding to displacement (or a position) of the magnetic member 130 (or the blade member 150) through calibration. In the embodiment, the size of the aperture 301 of the iris unit 60 for a large-diameter lens may be precisely varied to a desired value.

For example, the two output terminals of each of the two or more sensors may be connected in series to each other via wires or a circuit pattern formed on the circuit board 250. In addition, the circuit board 250 may output or supply a signal (hereinafter referred to as a "final output signal") output from both ends of the series-connected output terminals of the two or more sensors. For example, the circuit board 250 may include two wires (or terminals) to transmit or output the final output signal.

The description of the magnetic member 130, the position sensor 170, and the coil 120 shown in FIG. 12A may be applied directly or analogously to each of the plurality of sensors 170A to 1170D shown in FIG. 13A.

In another embodiment, the number of sensors of the position sensor 170 may be less than the number of magnet units 130-1 to 130-4. For example, the position sensor 170 may include two sensors (e.g., 170A and 170C) (or 170B and 170D) corresponding to two magnet units (e.g., 130-1 and 130-3) (or 130-2 and 130-4) located opposite each other with respect to the optical axis among the plurality of magnet units, and the remaining sensors (e.g., 170B and 170D) (or 170A and 170C) may be omitted.

In still another embodiment, the position sensor 170 may include two or more sensors (e.g., 170A and 170B) corresponding to two or more adjacent magnet units (e.g., 130-1 and 130-2) among the plurality of magnet units.

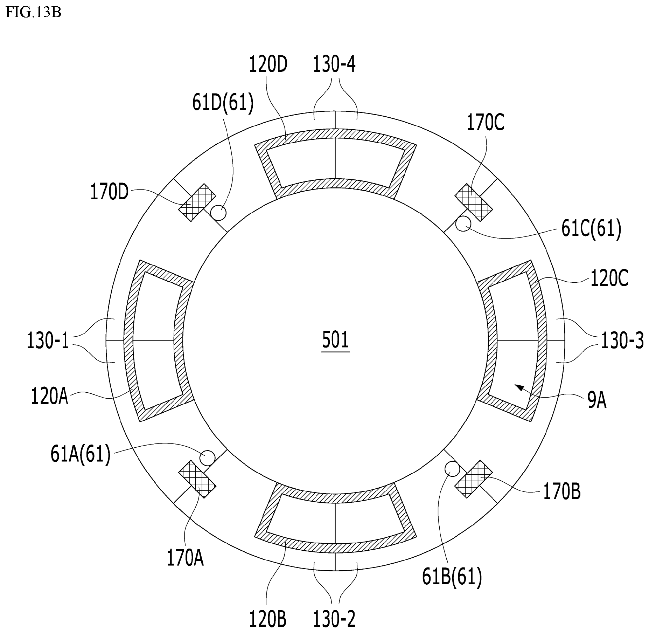

FIG. 13B shows arrangement of the position sensor 170 according to still another embodiment. FIG. 13B is a modification of FIG. 13A.

As shown in FIG. 13B, each of the sensors 170A to 170D may be disposed outside the hollow portion 9A in a respective one of the coil units 120A to 120B. The description of the magnetic member 130, the position sensor 170, and the coil 120 shown in FIG. 12B may be applied directly or analogously to each of the plurality of sensors 170A to 1170D shown in FIG. 13B.

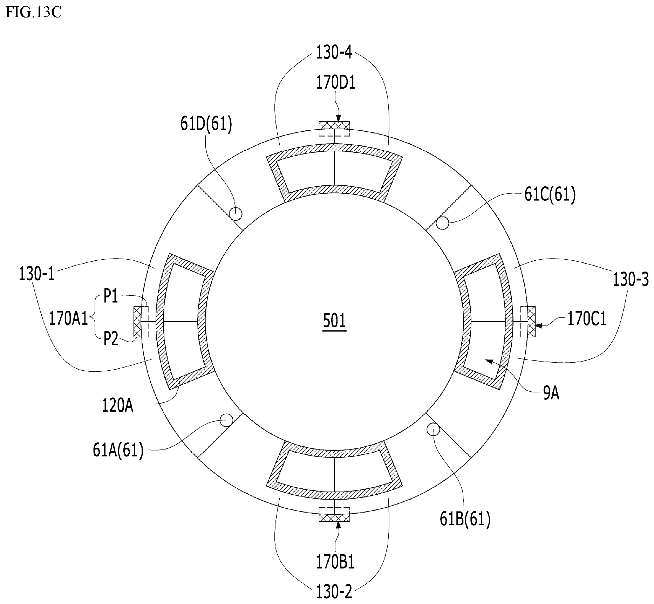

FIG. 13C shows arrangement of the position sensor 170 according to still another embodiment. FIG. 13C is another modification of FIG. 13A.

As shown in FIG. 13C, each of the sensors 170A1 to 170D1 may be disposed outside the hollow portion 9A in a respective one of the coil units 120A to 120B. Each of the sensors 170A1 to 170D1 may include a first portion P1 that overlaps a corresponding one of the magnet units 130-1 to 130-4 in the optical-axis direction and a second portion P2 that does not overlap the magnetic member 130 in the optical-axis direction.

The description of the magnetic member 130, the position sensor 170, and the coil 120 shown in FIG. 12C may be applied directly or analogously to each of the plurality of sensors 170A to 170D shown in FIG. 13C.

The descriptions of FIGs. 12D to 12F may be applied directly or analogously to FIGs. 13A to 13C.

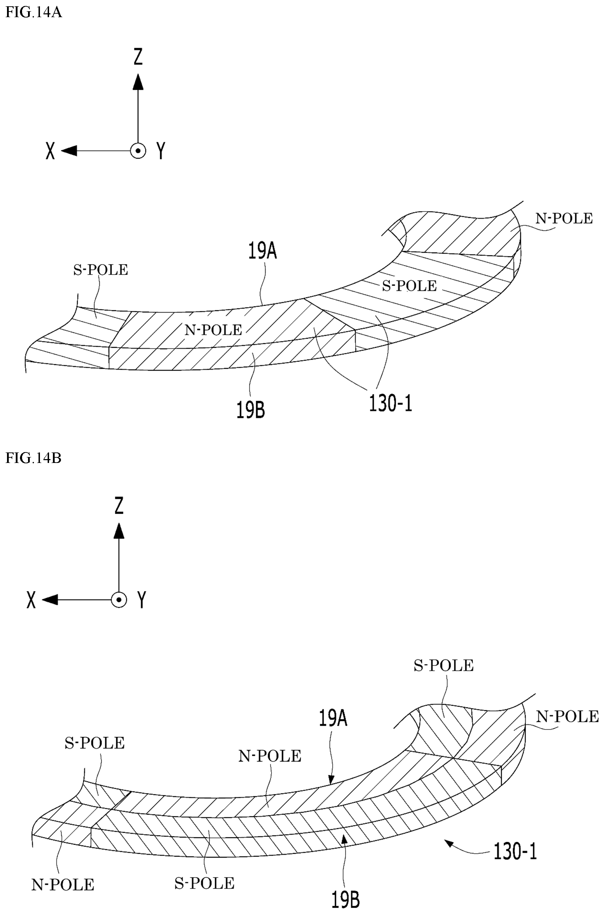

FIG. 14A shows polarities of the magnet unit 130-1 according to an embodiment.

Referring to FIG. 14A, the N pole and the S pole of the magnet unit 130-1 may be disposed to face each other or be separated from each other in the circumferential direction of the magnetic member 130 or in a direction perpendicular to the direction in which the inner circumferential surface (or the inner side surface) and the outer circumferential surface (or the outer side surface) of the magnetic member 130 face each other.

The N pole and the S pole of the magnet unit may be disposed to face each other or be separated from each other in a direction perpendicular to the optical axis. For example, the N pole and the S pole of the magnet unit may be disposed to face each other or be separated from each other in the circumferential direction of the magnetic member 130.

For example, the N pole and the S pole of the magnet unit may be disposed to face each other or be separated from each other in a direction perpendicular to the direction in which the inner circumferential surface 19A (or the inner side surface) and the outer circumferential surface 19B (or the outer side surface) of the magnetic member 130 face each other. Portions of two adjacent magnet units that are in contact with each other may have opposite polarities.

FIG. 14B shows polarities of the magnet unit 130-1 according to another embodiment.

Referring to FIG. 14B, the N pole and the S pole of the magnet unit 130-1 may be disposed to face each other or be separated from each other in the direction in which the inner circumferential surface 19A (or the inner side surface) and the outer circumferential surface 19B (or the outer side surface) of the magnetic member 130 face each other. Portions of two adjacent magnet units that are in contact with each other may have opposite polarities.

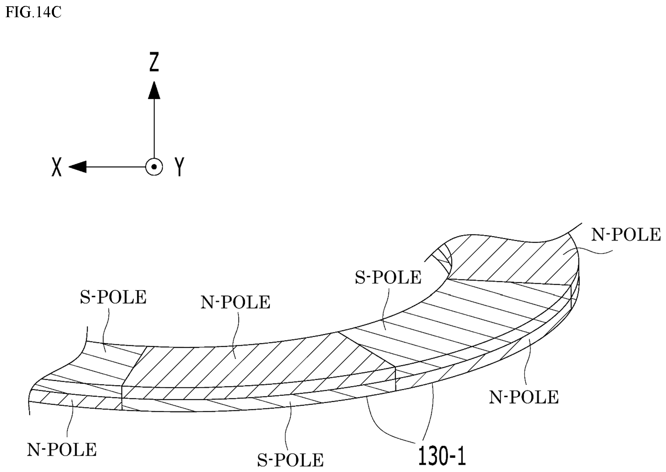

FIG. 14C shows polarities of the magnet unit 130-1 according to still another embodiment.

The magnet unit 130-1 shown in FIG. 14C may be a four-pole magnet having two N poles and two S poles. The magnet unit 130-1 may include a first magnet part, a second magnet part, and a partition wall located between the first magnet part and the second magnet part.

The first magnet part may include a first N pole, a first S pole, and a first interface portion located between the first N pole and the first S pole. The second magnet part may include a second N pole, a second S pole, and a second interface portion located between the second N pole and the second S pole. Each of the first interface portion and the second interface portion may be a portion that has substantially no magnetism and includes a zone having almost no polarity, and may be a portion that is naturally generated in order to form a magnet including one N pole and one S pole.

The partition wall may be a portion that separates or isolates the first magnet part and the second magnet part from each other and has substantially no magnetism or almost no polarity. For example, the partition wall may be implemented as a non-magnetic material or air. The partition wall may be referred to as a "neutral zone," a "neutral section," or a "non-magnetic partition wall."

The partition wall may be a portion that is artificially formed when the first magnet part and the second magnet part are magnetized. The width of the partition wall may be greater than the width of the first interface portion (or the width of the second interface portion). In this case, the width of the partition wall may be a length thereof in a direction from the first magnet part toward the second magnet part. The width of the first interface portion (or the second interface portion) may be a length of the first interface portion in a direction from the N pole toward the S pole of the first magnet part (or the second magnet part).

For example, the first magnet part and the second magnet part may be disposed to face each other in the circumferential direction of the magnetic member 130. In another embodiment, the first magnet part and the second magnet part may be disposed to face each other in the optical-axis direction.

The descriptions of the magnet unit 130-1 shown in FIGs. 14A to 14C may be applied directly or analogously to the remaining magnet units 130-2 to 230-4.

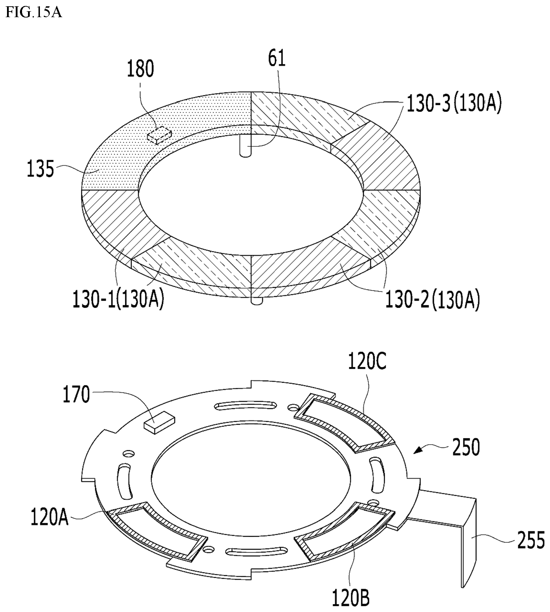

FIG. 15A shows arrangement of a sensing magnet 180 and the position sensor 170.

Referring to FIG. 15A, the iris module 40 may further include a sensing magnet 180 disposed in the moving unit. The position sensor 170 may correspond to, face, or overlap the sensing magnet 180 in the optical-axis direction. The sensing magnet 180 may move together with the moving unit. The position sensor 170 may detect the sensing magnet 180. For example, the position sensor 170 may detect a magnetic field of the sensing magnet 180.

As shown in FIG. 15A, the moving unit may include a magnet 130A including a plurality of magnet units 130-1 to 130-3, and a dummy member 135 disposed between two adjacent magnet units (e.g., 130-1 and 130-3). In FIG. 15A, the magnet 130A includes three magnet units. However, in another embodiment, the magnet 130A may include two magnet units or four or more magnet units. In addition, the coil 120 may include two coil units or four or more coil units.

The dummy member 135 may be in contact with two adjacent magnet units (e.g., 130-1 and 130-3). The dummy member 135 may connect two adjacent magnet units (e.g., 130-1 and 130-3). The magnet units 130-1 to 130-3 and the dummy member 135 may collectively form a ring shape.

In another embodiment, the dummy member 135 may be spaced apart from two adjacent magnet units (e.g., 130-1 and 130-3).

The dummy member 135 may alternatively be referred to as a "weight-balancing member," a "weight member," a "balancing member," or a "non-magnetic member." The dummy member 135 may be non-magnetic.

The sensing magnet 180 may overlap the dummy member 135 in the optical-axis direction. The sensing magnet 180 may be disposed on the dummy member 135. For example, the sensing magnet 180 may be coupled or attached to the dummy member 135. The sensing magnet 180 may be disposed on a lower surface of the dummy member 135. In another embodiment, the sensing magnet 180 may be disposed on an upper surface of the dummy member 135.

The dummy member 135 may include a receiving portion in which the sensing magnet 180 is disposed or received. For example, the receiving portion may be a recess.

The dummy member 135 may not overlap the coil 120 in the optical-axis direction. For example, the dummy member 135 may overlap the position sensor 170 in the optical-axis direction.

As shown in FIG. 15A, since the sensing magnet 180 is spaced apart from the magnet units 130-1 to 130-3 for driving, the position sensor 170 may be disposed far away from the coil units 120-1 to 120-3. The reliability of the position sensor 170 may be improved by suppressing an influence of magnetic fields generated from the coil units 120-1 to 120-3 on an output from the position sensor 170.

In another embodiment, the sensing magnet 180 may be disposed on the mover plate 80 shown in FIG. 4B. For example, the sensing magnet 180 may be disposed on a lower surface or an upper surface of the mover plate 80. In addition, for example, the mover plate 80 may include a receiving portion (e.g., a recess) in which the sensing magnet 180 is received or disposed.

The sensing magnet 180 may be a two-pole magnet having one N pole and one S pole. In another embodiment, the sensing magnet 180 may be a four-pole magnet having two N poles and two S poles.

In another embodiment, the moving unit may include a "first portion 130A (or magnetic portion)" including the magnet units 130-1 to 130-3 and a "second portion 135 (or non-magnetic portion)" that is non-magnetic. The first portion 130A and the second portion 135 may be connected to each other or may be in contact with each other. The first portion 130A and the second portion 135 may have a ring shape having a hollow portion. The description of the shape of the magnetic member 130 shown in FIG. 2A may be applied directly or analogously to the moving unit shown in FIG. 15A.

The sensing magnet 180 may overlap the second portion 135 (the non-magnetic portion) of the moving unit in the optical-axis direction. The sensing magnet 180 may be disposed on the second portion 135 (the non-magnetic portion) of the moving unit. The sensing magnet 180 may be coupled to the second portion 135 (the non-magnetic portion) of the moving unit. The sensing magnet 180 may be disposed on a lower surface of the second portion 135 of the moving unit. In another embodiment, the sensing magnet 180 may be disposed on an upper surface of the second portion 135 of the moving unit.

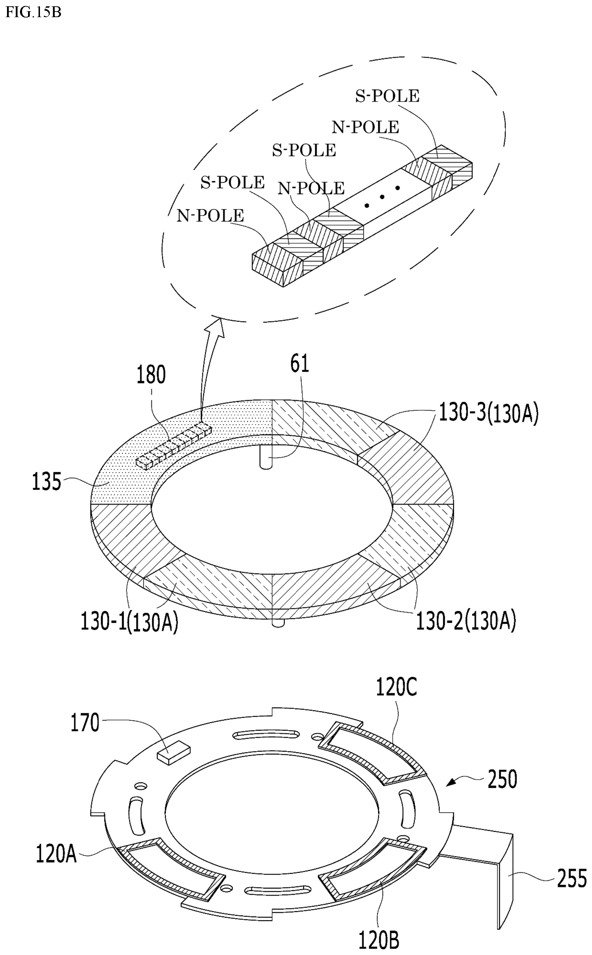

FIG. 15B shows another embodiment of the sensing magnet 180 shown in FIG. 15A.

Referring to FIG. 15B, the sensing magnet 180 may include N poles and S poles disposed alternately multiple times. For example, the N poles and the S poles of the sensing magnet 180 may be disposed alternately multiple times (K times, K being a natural number greater than 1) in a direction perpendicular to the optical axis. In FIG. 15B, the sensing magnet 180 has a rectangular parallelepiped shape. However, in another embodiment, the sensing magnet 180 may have a curved shape corresponding to a circumference of the magnetic member 130.

In addition, the camera device 200 according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission. For example, the optical instrument according to the embodiment may be a cellular phone, a mobile phone, a smartphone, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

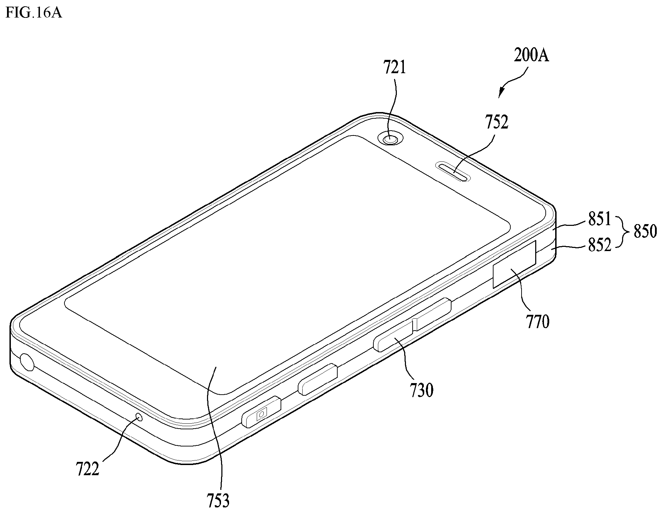

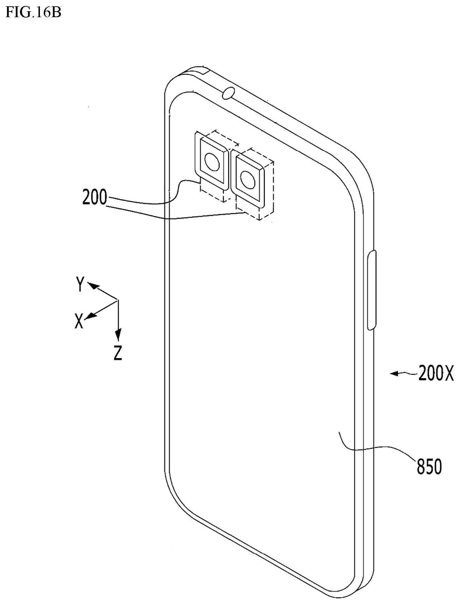

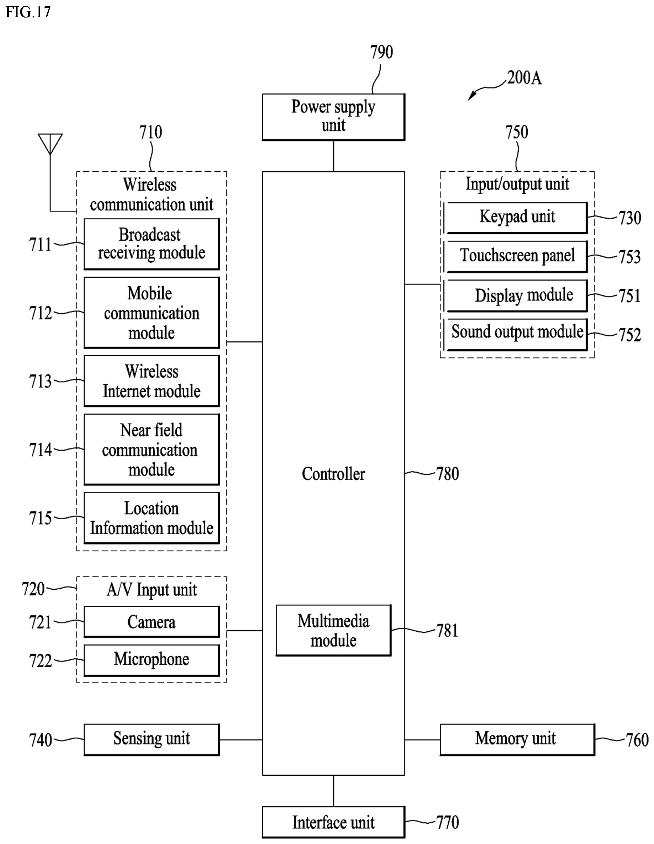

FIG. 16A is a perspective view of an optical instrument 200A according to an embodiment, FIG. 16B is a perspective view of an optical instrument 200X according to another embodiment, and FIG. 17 is a configuration diagram of the optical instruments 200A shown in FIGs. 16A and 16B.

For example, the embodiment shown in FIG. 16A may include a front camera disposed such that a lens module 10 of a camera device 200 faces a front surface of a body 850, and the embodiment shown in FIG. 16B may include a rear camera disposed such that a lens module 10 of a camera device 200 faces a rear surface of a body 850 of the optical instrument 200A. As shown in FIG. 16B, two rear cameras may be disposed. However, in another embodiment, one or three or more rear cameras may be disposed.

In another embodiment, the camera device 200 may be used both in the front camera and in the rear camera.

Referring to FIGs. 16A, 16B, and 17, the optical instrument 200A (hereinafter referred to as a portable "terminal") may include a body 850, a wireless communication unit 710, an A/V input unit 720, a sensing unit 740, an input/output unit 750, a memory 760, an interface unit 770, a controller 780, and a power supply unit 790.

The body 850 may have a bar shape, without being limited thereto, and may be any of various types such as, for example, a slide type, a folder type, a swing type, or a swivel type, in which two or more sub-bodies are coupled so as to be movable relative to each other.

The wireless communication unit 710 may include one or more modules, which enable wireless communication between the terminal 200A and a wireless communication system or between the terminal 200A and a network in which the terminal 200A is located. For example, the wireless communication unit 710 may include a broadcast receiving module 711, a mobile communication module 712, a wireless Internet module 713, a nearfield communication module 714, and a location information module 715.

The audio/video (A/V) input unit 720 may be a part for input of audio signals or video signals, and may include a camera 721 and a microphone 722.

The camera 721 may include the camera device 200 according to the embodiment.

The sensing unit 740 may sense the current state of the terminal 200A, such as the open or closed state of the terminal 200A, the position of the terminal 200A, the presence or absence of a user's touch, the orientation of the terminal 200A, or the acceleration/deceleration of the terminal 200A, and may generate a sensing signal to control the operation of the terminal 200A. For example, when the terminal 200A is a slide-type phone, whether the slide-type phone is open or closed may be detected. In addition, the sensing unit serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. For example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a call-signal receiving mode, a call mode, a recording mode, a voice recognition mode, or a broadcast receiving mode, or may output audio data stored in the memory 760.

The touchscreen panel 753 may convert variation in capacitance, caused by a user's touch on a specific region of a touchscreen, into electrical input signals.

The memory 760 may store programs for processing and control of the controller 780, and may temporarily store input/output data (e.g., a phone book, messages, audio, still images, pictures, and moving images). For example, the memory 760 may store images captured by the camera 721, for example, pictures or moving images.

The interface unit 770 serves as a passage for connection between the terminal 200A and an external device. The interface unit 770 may receive data or power from the external device, and may transmit the same to respective components in the terminal 200A, or may transmit data inside the terminal 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the terminal 200A. For example, the controller 780 may perform control and processing related to voice calls, data communication, and video calls.

The controller 780 may include a multimedia module 781 for multimedia playback. The multimedia module 781 may be provided in the controller 780, or may be provided separately from the controller 780.

The controller 780 may perform pattern recognition processing, by which writing or drawing input to the touchscreen is perceived as characters or images.

The power supply unit 790 may supply power required to operate the respective components upon receiving external power or internal power under the control of the controller 780.

The features, structures, effects, and the like described above in the embodiments are included in at least one embodiment of the present disclosure, but are not necessarily limited to only one embodiment. Furthermore, the features, structures, effects, and the like exemplified in the respective embodiments may be combined with other embodiments or modified by those skilled in the art. Therefore, content related to such combinations and modifications should be construed as falling within the scope of the present disclosure.

### [Industrial Applicability]

Embodiments may be applied to a lens module and a camera device capable of performing self-alignment between lenses using an iris module.

Embodiments may be applied to an iris module, a lens module, and a camera module capable of precisely varying the size of an aperture of an iris unit for a large-diameter lens to a desired value.

## Claims

1. A lens module comprising:
a lens barrel;
a plurality of lenses disposed in an optical-axis direction in the lens barrel; and
an iris module disposed between two adjacent lenses among the plurality of lenses,
wherein the iris module comprises a coupling portion to be coupled to at least one lens among the two lenses.

2. The lens module according to claim 1, wherein the coupling portion is provided for self-alignment with the at least one lens among the two lenses.

3. The lens module according to claim 1, wherein the at least one lens comprises a protrusion in contact with the coupling portion of the iris module.

4. The lens module according to claim 3, wherein the coupling portion of the iris module overlaps the protrusion of the at least one lens in a direction perpendicular to the optical-axis direction.

5. The lens module according to claim 1, wherein the coupling portion comprises a first coupling portion to be coupled to a first lens, the first lens being one of the two lenses, and a second coupling portion to be coupled to a second lens, the second lens being a remaining one of the two lenses.

6. The lens module according to claim 5, wherein the first coupling portion comprises a first alignment protrusion,
wherein the second coupling portion comprises a second alignment protrusion,
wherein the first lens comprises a first protrusion coupled to the first alignment protrusion, and
wherein the second lens comprises a second protrusion coupled to the second alignment protrusion.

7. The lens module according to claim 1, wherein the iris module comprises:
a carrier comprising the coupling portion; and
an iris unit disposed in the carrier, the iris unit being configured to vary an incident amount of incident light.

8. The lens module according to claim 7, wherein the carrier comprises a first carrier and a second carrier located under the first carrier and coupled to the first carrier, and
wherein the coupling portion comprises:
a first alignment protrusion disposed on the first carrier to be coupled to a first lens, the first lens being one of the two lenses; and
a second alignment protrusion disposed on the second carrier to be coupled to a second lens, the second lens being a remaining one of the two lenses.

9. The lens module according to claim 8, wherein the iris unit comprises a blade member configured to adjust a size of an aperture for incident light.

10. The lens module according to claim 9, wherein the second alignment protrusion has a lower surface disposed lower than a lowermost surface of the blade member.
